# EUROPÄISCHE PATENTANMELDUNG

(11) **EP 1 038 756 A2**
(43) Veröffentlichungstag der Anmeldung: **27.09.2000**
(21) Anmeldenummer: 00106000.3
(22) Anmeldetag: 27.03.2000
(51) Int. Cl.: B62D 11/18

(54) **Getriebe zum Antreiben von Rädern mit unterschiedlichen Geschwindigkeiten**

(30) Priorität: 26.03.1999 US 277344
(71) Anmelder: DEERE & COMPANY, Moline, Illinois 61265-8098 (US)
(72) Erfinder: Teal, Richard Donald, Horicon, WI 53032 (US); Hayes, Eugene Gary, Beaver Dam, WI 53916 (US); Marchese, David Lewis, Pewaukee, WI 53072 (US); Goebert, Barry Joseph, Beaver Dam, WI 53916 (US)
(74) Vertreter: Magin, Ludwig Bernhard

(57) **Zusammenfassung**

Getriebe zur Lenkung eines Fahrzeugs durch ein Antreiben seiner Räder mit unterschiedlichen Geschwindigkeiten weisen zumindest zwei Antriebseinheiten auf, wobei eine dieser Antriebseinheiten eine Antriebsgeschwindigkeit zum Antreiben der Räder und eine zweite Antriebseinheit eine Lenkgeschwindigkeit aufbringt, die mit der Antriebsgeschwindigkeit zur Erzeugung einer Geschwindigkeitsdifferenz zwischen den Rädern überlagert werden kann.

Es wird ein Getriebe (38) zur Lenkung eines Fahrzeugs (10) mittels der Erzeugung einer Geschwindigkeitsdifferenz zwischen seinen angetriebenen Rädern (24, 26) vorgeschlagen, das das Fahrverhalten und insbesondere die Fahrstabilität des Fahrzeugs (10) bei höheren Geschwindigkeiten verbessert. Darüber hinaus wird ein Fahrzeug (10) mit einem solchen Getriebe (38) gezeigt.

Getriebe und Fahrzeuge werden beispielsweise in der Rasen-, Garten- bzw. Grundstückspflege eingesetzt.

## Beschreibung

Die Erfindung betrifft ein Getriebe zum Antrieb und zur Lenkung eines Fahrzeugs mit zumindest einer Antriebseinheit und einer Lenkeinheit, die mit einer linken und einer rechten Antriebsachse derart wirksam verbindbar sind, daß die Antriebsachsen zur Lenkung des Fahrzeugs mit unterschiedlichen Geschwindigkeiten rotieren sowie ein Fahrzeug.

Es ist bekannt, kleine Fahrzeug wie Fahrzeuge zur Rasen-, Garten- und Grundstückspflege mit hydrostatischen Antrieben für jedes ihrer Antriebsräder auszustatten, so daß diese individuell angetrieben werden können. Ein solches Fahrzeug wird beispielsweise in dem Prospekt von Excel Industries mit dem Titel 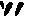 U-T-R The Ultimate Turning Radius" (USA, 1992) gezeigt.

Der Artikel 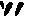 Tanks and dozers turn on a dime with new all-gear steering", aus 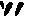 Popular Science" (USA, 1985, Seiten 60 - 62) zeigt ein Lenk- und Antriebssystem für einen Panzer bzw. ein Kettenfahrzeug bei dem sowohl für den Antrieb von Kettenantriebsräder wie auch deren Lenkung jeweils ein Antrieb vorgesehen ist, deren Ausgabe über zwei Differentiale, deren Ausgangswellen über kämmende Zahnräder in Verbindung stehen, an die Kettenantriebsräder weitergegeben wird, so daß deren durch den Antrieb vorgegebene Geschwindigkeit durch die Ausgabe der Lenkung überlagert wird.

Die nach dem Prioritätstag der vorliegenden Anmeldung veröffentlichte WO 00/01569 zeigt einen Rasentraktor mit vier Rädern, der dadurch gelenkt wird, daß seine rückwärtigen Räder mit differierenden Geschwindigkeiten angetrieben werden. Hierzu sind zwei hydrostatische Antriebe vorgesehen, wobei der erste die Räder in Vorwärts- bzw. Rückwärtsrichtung antreibt und der zweite Antrieb eine Rotationsbewegung liefert, die mit der Rotation des ersten Antriebs zur Lenkung des Fahrzeugs überlagert wird. Bei dieser Anmeldung handelt es sich um ein nachveröffentlichtes Dokument, bei dem noch nicht zu ersehen ist, ob und für welche Länder es als Stand der Technik nach Artikel 54 (3) EPÜ heranzuziehen ist. Es bleibt jedoch auf jeden Fall bei der Beurteilung der erfinderischen Tätigkeit außer Betracht.

Das der Erfindung zugrunde liegende Problem wird darin gesehen, daß bei bekannten Antriebs- und Lenkgetrieben bzw. bei Fahrzeugen mit solchen Getrieben bei höheren Geschwindigkeiten und der Ausführung enger Wendungen zu einer Instabilität des Fahrzeugs kommen kann.

Dieses Problem wird erfindungsgemäß durch die Lehre der Patentansprüche 1 und 6 gelöst, wobei in den weiteren Patentansprüchen die Lösung in vorteilhafter Weise weiterentwickelnde Merkmale aufgeführt sind.

Auf diese Weise wird sichergestellt, daß bei höheren Geschwindigkeiten des Fahrzeugs keine zu scharfen Wendungen ausgeführt werden können, da die Lenkgeschwindigkeit bei einem Antrieb des Fahrzeugs mit einer maximalen Antriebsgeschwindigkeit nicht ausreicht, um eines der Räder auf Null abzubremsen und somit eine Wendung mit einem 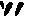 Null"-Radius auszuführen. Darüber hinaus kann bei einer Wendung auf der Stelle nur eine maximale Antriebsgeschwindigkeit aufgebracht werden, die der maximalen Lenkgeschwindigkeit entspricht und die daher nur einem Drittel der maximalen Antriebsgeschwindigkeit bei einer Geradeausfahrt des Fahrzeugs entspricht.

Vorzugsweise ist die maximale Antriebsgeschwindigkeit höchstens fünfmal größer als die maximale Lenkgeschwindigkeit, da sonst bei einem Antrieb des Fahrzeugs mit einer maximalen Antriebsgeschwindigkeit nur Wendungen mit einem sehr großen Radius ausgeführt werden können, wodurch die Handhabbarkeit des Fahrzeugs unnötig verschlechtert werden könnte.

Ein solches Getriebe kann in Verbindung mit Elektromotoren oder herkömmlichen Verbrennungsmotoren vorgesehen sein. Vorzugsweise ist zumindest eine der Antriebseinheiten als ein hydrostatischer Antrieb ausgeführt, der eine stufenlose Veränderung des aufgebrachten Lenk- bzw. Antriebsmoments ermöglicht.

Die Überlagerung der Antriebs- und der Lenkgeschwindigkeit kann dadurch erfolgen, daß eine oder mehrere Ausgangswellen der Antriebseinheiten über ein Getriebe verbindbar sind. Bei einem solchen Getriebe kann es sich beispielsweise um ein Riemen-, Ketten- oder ein Zahnradgetriebe handeln. Die Momentendifferenz kann beispielsweise bei gleich ausgelegten Antriebseinheiten durch eine entsprechende Dimensionierung der jeweiligen Zahnräder bzw. Riemenscheiben erzielt werden. Es ist aber auch denkbar, daß Antriebseinheiten mit unterschiedlicher maximaler Geschwindigkeitsausgabe vorgesehen sind. Es ist dabei denkbar, daß die Ausgangswellen dauerhaft verbunden sind und die Antriebseinheit, die bei Lenkbewegungen eine Lenkgeschwindigkeit aufbringt, bei Geradeausfahrt leer mitläuft, soweit dies bei dem zu verwenden Getriebetyp möglich ist, oder daß eine ein- und ausrückbare Kupplung zum Zuschalten der zweiten Antriebseinheit vorgesehen ist.

Es ist denkbar, daß nur ein Rad zum Ausführen einer Wendung durch die zweite Antriebseinheit beeinflußbar ist, so daß ein Rad immer mit der durch die erste Antriebseinheit aufgebrachten Antriebsgeschwindigkeit beaufschlagt wird. Vorzugsweise wirkt die zweite Antriebseinheit aber auf zwei zumindest annähernd gegenüberliegende Antriebswellen bzw. zugehörige Räder des Fahrzeugs. Um hierbei eine Geschwindigkeitsdifferenz zu erzielen, kann die Richtung der aufgebrachten Momente entgegengesetzt sein. Dies kann beispielsweise dadurch erzielt werden, daß zwei der Ausgangswellen direkt und zwei weitere über ein Freilaufzahnrad oder andere bekannte Mittel zur Drehrichtungsumkehr verbindbar sind.

Besonders vorteilhaft ist es ein solches Getriebe an einem Fahrzeug zur Rasen-, Garten- und Grundstückspflege einzusetzen, da dadurch die Wendigkeit und Manövrierbarkeit eines solchen Fahrzeugs verbessert wird. Es wird dabei allerdings vermieden, daß insbesondere durch ungeübte Bedienungspersonen sehr enge Wendungen bei hohen Antriebsgeschwindigkeiten ausgeführt werden, die zu einer Instabilität des Fahrzeugs führen könnten. Bei Fahrzeugen zur Rasen-, Garten- bzw. Grundstückspflege kann es sich um Rasentraktoren, Aufsitzmäher oder auch um Schneefräsen und -räumgeräte oder auch um Kehrmaschinen oder ähnliches handeln. Es ist aber auch der Einsatz eines solchen Getriebes an anderen Fahrzeugen wie beispielsweise an Baumaschinen wie an Kompaktladern (Skid Steer Loaders) o.ä. denkbar.

In der Zeichnung sind mehrere nachfolgend näher beschriebene Ausführungsbeispiele der Erfindung dargestellt. Es zeigt:
- Fig. 1: eine Seitenansicht eines als Gartentraktor ausgeführten Fahrzeugs,
- Fig. 2: eine schematische Ansicht eines Getriebes mit zwei Differentialen,
- Fig. 3: eine perspektivische Teilansicht von verschiedenen Bereichen des Fahrzeugs aus Figur 1, wobei ein Rahmen, ein Lenkgestänge, ein Pedalgestänge wie auch eine Antriebs- und eine Lenkeinheit des Getriebes dargestellt ist,
- Fig. 4: eine perspektivische Teilansicht des Fahrzeugs von unten, wobei wiederum der Rahmen, das Lenkgestänge, das Pedalgestänge wie auch die Antriebs- und Lenkeinheit des Getriebes dargestellt ist,
- Fig. 5: eine perspektivische Ansicht des Fahrzeugs von unten, in der das Pedalgestänge genauer dargestellt ist,
- Fig. 6: eine perspektivische Ansicht eines Sektorzahnrads, einer Sektorwelle und eines Sektorhebels,
- Fig. 7: eine perspektivische Ansicht einer alternativen Ausführungsform des in den Figuren 3 - 6 dargestellten Lenkgestänges,
- Fig. 8: eine perspektivische Ansicht des Lenkgestänges aus Fig. 7 von links in einer neutralen Stellung,
- Fig. 9: eine Seitenansicht des Lenkgestänges aus Fig. 7 von rechts in einer neutralen Stellung,
- Fig. 10: eine weitere Ansicht des Lenkgestänges aus Figur 7,
- Fig. 11: eine Seitenansicht des in den Figuren 7 - 10 gezeigten Lenkgestänges von rechts, wobei das Pedal herunter gedrückt ist,

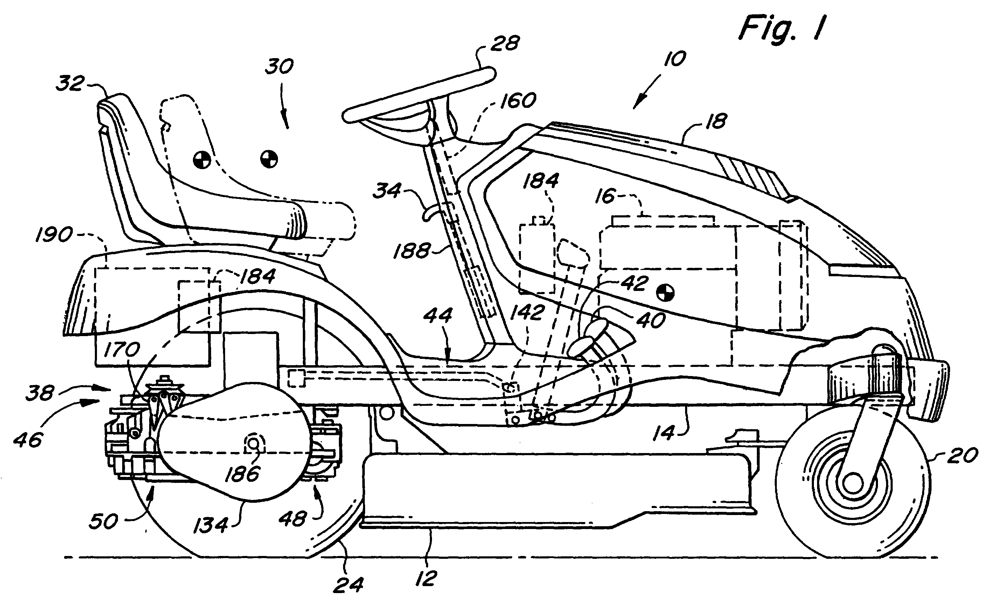

Es wird nun auf die Zeichnung Bezug genommen, in der bevorzugte Ausführungsformen der vorliegenden Erfindung gezeigt werden. Figur 1 zeigt einen Rasen- und Gartentraktor bzw. ein Fahrzeug 10 entsprechend der vorliegenden Erfindung. An diesem Fahrzeug 10 ist ein Mähwerk 12 angebracht, das unterhalb eines Fahrzeugrahmens 14 angeordnet ist. Eine Leistungsquelle oder ein Antrieb 16 ist unterhalb einer Haube 18 in einem vorderen Bereich des Fahrzeugs 10 angeordnet und ist wirksam mit dem Mähwerk 12 verbunden, um Rotationsenergie an in dem Mähwerk 12 angeordnete Mähmesser zu übermitteln. Die Mähmesser rotieren in dem Mähwerk 12 um Gras zu schneiden, wenn sich das Fahrzeug 10 über den Untergrund bewegt. Das Fahrzeug 10 weist ein Paar vorderer Freilaufräder bzw. Räder 20 und 22 auf, die den Untergrund berühren und schwenken, wenn das Fahrzeug 10 eine Wendung ausführt. Das Fahrzeug 10 weist ein rückwärtiges Paar von den Boden berührenden Rädern 24 und 26 auf, die wirksam mit dem Antrieb 16 verbunden sind, um das Fahrzeug 10 über den Boden zu bewegen. Eine Bedienungsperson kann ein Lenkrad 28 bedienen, um zu bewirken, daß das linke und das rechte rückwärtige Rad 24 und 26 mit einer unterschiedlichen Geschwindigkeit rotieren, um hierdurch zu verursachen, daß das Fahrzeug 10 eine Wendung ausführt, wie es unten genauer beschrieben wird.

Eine Bedienerplattform 30 ist vorgesehen, welche einen Sitz 32 aufweist, auf dem eine Bedienungsperson während einer Fahrzeugfahrt sitzt. Eine Mehrzahl von Steuerhebeln 34 sind in der Bedienerplattform 30 angeordnet und können durch die Bedienungsperson betätigt werden, um den Betrieb des Fahrzeugs 10 zu steuern. Das Lenkrad 28 ist vorgesehen, welches durch die Bedienungsperson betätigt werden kann, um zu verursachen, daß das Fahrzeug 10 eine Wendung ausführt. Ein Gestänge 36 ist wirksam mit dem Lenkrad 28 verbunden, wobei das Getriebe 38 im folgenden genauer beschrieben wird. Ein Vorwärts-Pedal 40 ist vorgesehen und kann durch die Bedienungsperson heruntergedrückt werden, um das Fahrzeug 10 in Vorwärtsrichtung zu fahren. Je weiter die Bedienungsperson das Vorwärts-Pedal 40 drückt, je schneller wird das Fahrzeug 10 sich im Vorwärtsbetrieb bewegen. Ein Umkehr-Pedal 42 ist ebenso vorgesehen, welches bewirkt, daß das Fahrzeug 10 in der umgekehrten Richtung fährt, wenn die Bedienungsperson das Umkehr-Pedal 42 herunterdrückt. Je weiter die Bedienungsperson das Umkehr-Pedal 42 drückt, je schneller wird sich das Fahrzeug 10 im Rückwärtsbetrieb bewegen. Ein Gestänge 44, das sich zwischen den Pedalen 40 und 42 und dem Getriebe 38 erstreckt, wird unten separat genauer beschrieben.

### Getriebe vom Antriebs- und Lenktyp

Das Fahrzeug 10 entsprechend der vorliegenden Erfindung weist ein Getriebe 38 auf, das dazu dient, eine Doppelfunktion bezüglich des Übertragens von Rotationsenergie von dem Antrieb 16 zu den Rädern 24 und 26, um das Fahrzeug 10 über den Untergrund zu bewegen, und des Veränderns der Drehgeschwindigkeit des linken und des rechten Rads 24 und 26, so daß die Räder 24 und 26 mit unterschiedlicher Geschwindigkeit rotieren, um dadurch Fahrzeugwendungen ausführen und das Fahrzeug 10 lenken zu können, zu erfüllen. Zwei Arten von Getrieben werden hier beschrieben, welche zur Verwendung in Übereinstimmung mit der vorliegenden Erfindung zum Antrieb und zur Lenkung des Fahrzeugs 10 angepaßt sind. Auf das erste wird hier als ein Getriebe vom Typ mit zwei Differentialen Bezug genommen und auf das zweite wird Bezug genommen als ein Getriebe vom Typ Planetengetriebe. Das Getriebe mit zwei Differentialen wird zuerst beschrieben.

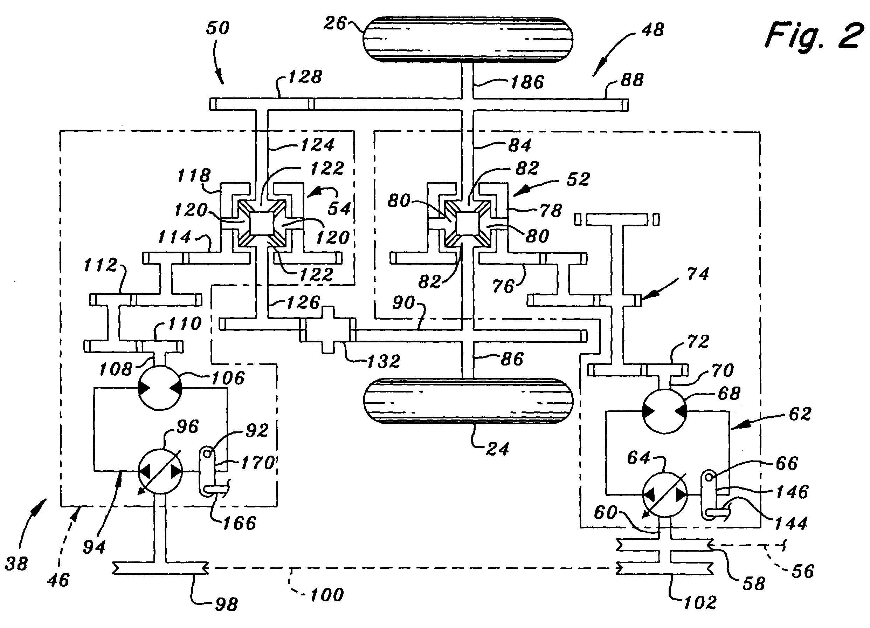

Es wird nun auf Figur 2 Bezug genommen, in der ein Schema eines Getriebes 46 mit zwei Differentialen zur Verwendung in der vorliegenden Erfindung gezeigt wird. Das Getriebe 46 weist eine Antriebseinheit 48 und eine Lenkeinheit 50 auf, welche jeweils ein Differential 52, 54 aufweisen. Die Antriebseinheit 48 erhält Rotationsenergie von dem Antrieb 16. Ein Riemen 56, der wirksam mit dem Antrieb 16 verbunden ist und durch diesen angetrieben wird, erstreckt sich nach rückwärts und greift an einer Antriebsriemenscheibe 58 an. Die Antriebsriemenscheibe 58 ist mit einer Antriebseingangswelle 60 eines Antriebsbereichs eines hydrostatischen Antriebs 62 verbunden. Rotationsenergie, die durch den Antrieb 16 erzeigt wurde, wird über das Riemensystem zu der Antriebsriemenscheibe 58 und in den Antriebsbereich des hydrostatischen Antriebs 62 übertragen. Die Taumelscheibe der Antriebspumpe 64 ist steuerbar, um die Förderleitung der Pumpe 64 variieren zu können, und ist mit einem Gestänge 44 verbunden, das sich zu dem Vorwärts-Pedal 40 und dem Umkehr-Pedal 42 erstreckt. Die Bedienungsperson bedient das Vorwärts-Pedal 40 und das Umkehr-Pedal 42. um eine Antriebssteuereingangswelle 66 zu verschwenken, welche wiederum die Förderleistung der Pumpe 64 steuert und dadurch die Menge an Rotationsenergie des Antriebs 16 erhöht oder erniedrigt, die durch die Antriebseinheit 48 an die Räder 24, 26 übermittelt wird. Die Geschwindigkeit des Fahrzeugs 10 wird dadurch gesteuert. Ein Herunterdrücken des Vorwärts-Pedals 40 bewirkt, daß die Antriebssteuereingangswelle 66 in eine erste Richtung gedreht wird, welche das Getriebe 46 dazu bringt, die Räder 24 und 26 in eine Vorwärtsrichtung anzutreiben, und ein Herunterdrücken des Rückwärtspedals 42 bewirkt, daß die Antriebssteuereingangswelle 66 in eine zweite entgegengesetzte Richtung schwenkt, welche das Getriebe 46 dazu bringt, die Räder 24 und 26 in eine Rückwärtsrichtung anzutreiben. Das Gestänge 44, das sich zwischen den Pedalen 40, 42 und der Antriebssteuereingangswelle 66 erstreckt, wird unten genauer beschrieben. Der Motor 68 der Antriebseinheit 48 weist eine Ausgangswelle 70 mit einem Zahnrad 72 auf. Das Zahnrad 72 treibt eine Serie von Zahnrädern 74 an, welche wiederum ein Hohlrad 76 des Differentials 52 der Antriebseinheit 48 antreiben. Das Differential 52 weist ein Gehäuse 78, Planetenräder 80 und ein Paar von Seitenrädern 82 auf, welche auf jeweiligen linken und rechten Antriebswellen 84, 86 angeordnet sind, die sich von dem Gehäuse 78 nach außen erstrecken. Mit den linken und rechten Antriebswellen 84, 86 sind jeweils linke und rechte erste Zahnräder 88, 90 verbunden.

Als nächstes wird die Lenkeinheit 50 des Getriebes 46 beschrieben. Das Lenkrad 28 weist ein Gestänge 36 auf, das sich nach rückwärts erstreckt, um an einer Lenksteuereingangswelle 92 eines Lenkbereichs des hydrostatischen Antriebs 94 anzugreifen und sie zu steuern. Das Lenkgestänge 36 wird untenstehend genauer beschrieben. Die Lenkpumpe 96 erhält Rotationsenergie von dem Antrieb 16 über das Riemensystem. Eine Lenkeinheitsriemenscheibe 98 greift an einem Riemen 100 an, welcher an einer zweiten Riemenscheibe 102 angreift, welche mit der Antriebssteuereingangswelle 60 fest verbunden ist. Rotationsenergie von dem Antrieb 16 wird an die hydrostatische Lenkpumpe 92 über den Riemen 56, die Riemenscheibe 58, die Antriebssteuereingangswelle 60, die zweite Riemenscheibe 102, den Riemen 100, die Lenkeinheitsriemenscheibe 98 und die Lenksteuereingangswelle 92 übertragen. Die Lenkpumpe 96 weist eine Taumelscheibe mit variabler Förderleistung auf, die durch die Lenksteuereingangswelle 92 gesteuert wird. Die Lenksteuereingangswelle 92 ist mit dem Lenkgestänge 36 verbunden und wird dadurch gesteuert, daß die Bedienungsperson, das Lenkrad 18 betätigt. Wenn die Bedienungsperson das Lenkrad 28 leicht nach recht dreht, bewirkt das Lenkgestänge 36, daß die Lenksteuereingangswelle 104 in eine erste Richtung schwenkt, die mit einer Rechtswendung korrespondiert. Wenn die Bedienungsperson das Lenkrad 28 weiter in die rechte Richtung dreht, bewirkt das Lenkgestänge 36, daß die Lenksteuereingangswelle 92 weiter in die erste Richtung schwenkt, wodurch die Lenkpumpe 96 mehr Flüssigkeit fördert und der Lenkmotor 106 schneller in die erste Richtung dreht. Wenn die Bedienungsperson das Lenkrad 28 aus seiner neutralen Stellung nach links dreht, bewirkt das Lenkgestänge 36, daß die Lenksteuereingangswelle 92 in die zweite Richtung schwenkt, die mit einer Linkswendung korrespondiert.

Der Lenkmotor 106 weist eine Ausgangswelle 108 mit einem Zahnrad 110 auf, welches über eine Serie von Zahnrädern 112, ein Hohlrad 114 des Lenkdifferentials bzw. Differentials 54 antreibt. Das Differential 54 weist ein Gehäuse 118, Planetenräder 120 und ein Paar von Seitenrädern 122 auf, welche jeweils auf linken und rechten Lenkwellen 124, 126 angebracht sind. Zweite Zahnräder 128, 130 sind auf äußeren Enden der Lenkwellen 124, 126 vorgesehen. Die zweiten Zahnräder 128, 130 kämmen jeweils wirksam mit einem korrespondierenden ersten Zahnrad 88, 90 auf der gleichen Seite des Fahrzeugs 10, um die rotierende Bewegung der zweiten Zahnräder 128, 130 auf die ersten Zahnräder 88, 90 während des Ausführens einer Wendung zu übertragen. Das erste Zahnrad 88 auf der linken Seite des Fahrzeugs greift an dem entsprechenden zweiten Zahnrad 128 direkt an, so daß das linke erste Zahnrad 88 in der dem zweiten Zahnrad 128, mit dem es kämmt, entgegengesetzten Richtung dreht. Das erste Zahnrad 90 auf der rechten Seite des Fahrzeugs 10 greift an dem korrespondierenden zweiten Zahnrad 128 über ein Freilaufzahnrad 132 an, so daß das rechte erste Zahnrad 90 in der gleichen Richtung dreht, wie das zweite Zahnrad 130 auf der rechten Seite des Fahrzeugs 10. Alternativ könnten ebenso Ketten und Kettenzahnräder, um die Lenkwellen 124, 126 mit den Antriebswellen 84, 86 zu verbinden, anstelle der ersten Zahnräder 88, 90, der zweiten Zahnräder 128, 130 und des Freilaufzahnrads 132, die in Figur 2 gezeigt werden, im Rahmen der vorliegenden Erfindung verwendet werden.

Als nächstes wird der Betrieb des Getriebes 46 genauer beschrieben werden. Als erstes wird die Geradeausfahrt beschrieben. Zur Geradeausfahrt wird die Bedienungsperson das Lenkrad 28 in seiner zentralen Stellung halten und das Vorwärts-Pedal 40 nach unten drücken. Ein Herunterdrücken des Vorwärts-Pedals 40 zwingt das Lenkgestänge 36 die Lenksteuereingangswelle 66 der Antriebspumpe 64 in eine Stellung zu schwenken, die mit der Vorwärtsfahrt korrespondiert. Dies zwingt die Antriebspumpe 64 dazu, Flüssigkeit zu fördern, wodurch der hydrostatische Motor 68 rotiert. Dies zwingt die Ausgangswelle 80, das Zahnrad 82 und das Hohlrad 76 der Antriebseinheit 48 zu rotieren. Das Antriebsdifferential oder Differential 52 wird als eine Einheit so rotieren, daß die Planetenräder 80 nicht um ihre Welle drehen werden, aber in dem Hohlrad 76 rotieren werden, und dadurch bewirken, daß die Seitenräder 82 mit der gleichen Drehzahl wie das Hohlrad 76 rotieren. Die Antriebswellen 84, 86 werden daher mit der gleichen Geschwindigkeit rotieren, was zu einer Geradeausfahrt des Fahrzeugs führt. Darüber hinaus wird, während das Lenkrad 28 in seiner neutralen, zentralen Stellung gehalten wird, die Lenkeinheit 50 sicherstellen, daß die Antriebswellen 84, 86 mit der gleichen Geschwindigkeit rotieren, indem sie das Differential 52 der Antriebseinheit 48 wirksam festlegt. Die Ausgangswelle 108 des Lenkmotors 106 kann nicht rotieren, ohne daß die Lenkpumpe 96 den Lenkmotor 106 zwingt zu rotieren. Mit anderen Worten kann der Lenkmotor 106 nicht die Lenkpumpe 96 antreiben und die Ausgangswelle 108 des Lenkmotors 106 wird festgehalten, wenn die Lenkpumpe 96 den Lenkmotor 106 nicht antreibt. Die Ausgangswelle 108 bleibt stationär, wenn das Lenkrad 28 in seiner zentralen, neutralen Stellung verbleibt. Daher werden das Zahnrad 110, die Serie von Zahnrädern 112, das Hohlrad 114 und das Gehäuse 118 nicht rotieren, da die Ausgangswelle 108 festgelegt ist und nicht rotieren wird, und daher können die Planetenräder 120 nur um ihre eigene Welle rotieren, wodurch die Seitenräder 122, die Lenkwellen 124, 126 und die zweiten Zahnräder 128, 130 mit gleicher Geschwindigkeit in entgegengesetzte Richtung drehen. Da die zweiten Zahnräder 128, 130 zwangsläufig mit gleicher Geschwindigkeit in entgegengesetzten Richtungen rotieren, müssen die ersten Zahnräder 88, 90, die mit den zweiten Zahnräder 128, 130 wirksam verbunden sind, ebenfalls mit identischer Geschwindigkeit rotieren, wodurch die Antriebswellen 84, 86 und die rückwärtigen, angetriebenen Räder 24, 26 auf jeder Seite des Fahrzeugs 10 mit identischen Geschwindigkeiten rotieren. Und da die ersten Zahnräder 88, 90 mit identischen Geschwindigkeiten rotieren, bewegt sich das Fahrzeug 10 in einer geraden Linie, wenn das Lenkrad 28 in seiner zentralen Stellung gehalten wird.

Da der Antriebsmotor 106 die Lenkpumpe 96 nicht rückwärts antreiben kann, werden die Ausgangswelle 108, das Zahnrad 110, die Serie von Zahnrädern 112 und das Hohlrad 114 in einer stationären Stellung gehalten, wenn sich das Lenkrad 28 in seiner neutralen, zentralen Stellung befindet. Dies dient dazu, das Differential 52 der Antriebseinheit 48 wirksam zu blockieren. Da die zweiten Zahnräder 128, 130 zwangsläufig mit identischen aber entgegengesetzten Geschwindigkeiten rotieren, rotieren die ersten Zahnräder 88, 90 zwangsläufig mit identischen Geschwindigkeiten, wenn das Lenkrad 28 in seiner neutralen, zentralen Stellung gehalten wird, wodurch die Räder 24, 26 ebenfalls mit identischen Geschwindigkeiten rotieren. Da die angetriebenen Räder 24, 26 mit identischen Geschwindigkeiten rotieren müssen, wenn sich das Lenkrad 28 in seiner zentralen Stellung befindet, wird das Differential 52 der Antriebseinheit 48 davon abgehalten, Energie von einem der Räder 24, 26 an das andere zu übertragen, beispielsweise wenn bei einem Rad 24, 26 die Bodenhaftung verloren geht. Daher wird die Lenkeinheit wirksam das Differential 25 der Antriebseinheit 48 blockieren, wenn das Lenkrad 28 in seiner zentralen Stellung gehalten wird.

Um während der Vorwärtsfahrt eine Fahrzeugwendung auszuführen, schwenkt die Bedienungsperson das Lenkrad 28 in üblicher Weise in die Richtung, in die er möchte, daß sich das Fahrzeug 10 dreht. Ein Drehen des Lenkrades 28 bewirkt, daß das Lenkgestänge 36 die Lenksteuereingangswelle 92 verschwenkt, wodurch die Lenkpumpe 96 Flüssigkeit zu dem Lenkmotor 106 pumpt. Dies bewirkt, daß sich die Ausgangswelle 108 dreht. Das Zahnrad 110 rotiert mit der Ausgangswelle 108, wodurch die Serie von Zahnrädern 112 und das Hohlrad 114 der Lenkeinheit 50 rotieren. Dies bewirkt, daß das Differentialgehäuse 118 rotiert und sich die Planetenräder 120 in dem Differentialgehäuse 118 bewegen. Da die Planetenräder 120 der Lenkeinheit 50 mit dem Gehäuse 188 um eine Welle rotieren, die durch die Lenkwellen 124, 126 bestimmt wird, werden die Planetenräder 120 Kräfte an die Seitenräder 122 anlegen, die das Seitenrad 122, das in der Richtung des Gehäuses 118 und des Hohlrads 114 rotiert, beschleunigen und das andere Seitenrad 122, das in dem Gehäuse 118 und dem Hohlrad 114 entgegengesetzter Richtung rotiert, um den gleichen Betrag verlangsamen. Dies bewirkt, daß die Lenkwelle 124 oder 126 und das zweite Zahnrad 128 oder 130 auf einer Seite des Fahrzeugs 10 verlangsamt, und die Lenkwelle 124 oder 126 und das zweite Zahnrad 128 oder 130 auf der anderen Seite um den gleichen Betrag beschleunigt wird. Das verlangsamte zweite Zahnrads 128 oder 130 wird das erste Zahnrad 88 oder 90, mit dem es verbunden ist, verlangsamen, wodurch die angetriebenen Räder 24 oder 26 auf dieser Seite des Fahrzeugs 10 verlangsamt werden. Das Differential 52 der Antriebseinheit 48 erlaubt eine Übertragung von Leistung zu den angetriebenen Rädern 24, 26 auf jeder Seite des Fahrzeugs 10 selbst wenn die angetriebenen Räder 24, 26 nicht mit der gleichen Geschwindigkeit drehen. Wenn die Räder 24, 26 mit unterschiedlichen Geschwindigkeiten rotieren, wie es vorstehend beschrieben wurde, wird das Fahrzeug 10 eine Wendung ausführen.

Figur 1 zeigt vordere Freilaufräder 20, 22, die schwenken, um es den Freilaufrädern 20 zu erlauben, in Kontakt mit dem Untergrund leicht zu verschwenken, wenn das vordere Ende des Fahrzeugs 10 während des Ausführens einer Wendung herumschwenkt. Jedoch können ebenso andere Arten von schwenkbaren, vorderen Rädern vorgesehen sein, die nicht frei schwenken.

Diese Art von Getriebe 46 erlaubt eine Ausführung sehr enger Wendungen. Beispielsweise kann die Bedienungsperson das Lenkrad drehen, um eine Drehung auf der Stelle auszuführen, wenn die Bedienungsperson nicht das Vorwärts- oder Rückwärtspedal 40, 42 betätigt. Wenn die Bedienungsperson weder das Vorwärts- noch das Rückwärtspedal 40, 42 herunterdrückt, bleibt das Fahrzeug 10 stationär und wird weder in einer Vorwärts- noch Rückwärtsrichtung angetrieben. Daher pumpt die Antriebspumpe 62 keine hydraulische Flüssigkeit zu dem Antriebsmotor 68 und die Ausgangswelle 70, das Zahnrad 72, die Serie von Zahnrädern 74, das Hohlrad 76, die Planetenräder 80, die Seitenräder 82, die Antriebswellen 84 und 86 und die ersten Zahnräder 88 und 90 sind stationär. Wenn die Bedienungsperson das Lenkrad 28 dreht, wird das Lenkgestänge 36 verursachen, daß die Lenkpumpe 96 Flüssigkeit zu dem Lenkmotor 106 pumpt, welcher die Ausgangswelle 108 und das Zahnrad 100 drehen wird. Dies wird die Serie von Zahnrädern 112, das Hohlrad 114 und das Gehäuse 118 drehen, wodurch die Planetenräder 120 mit dem Gehäuse 118 um die Welle der Lenkwellen 124, 128 rotieren werden. Dies bewirkt, daß die Lenkwellen 124, 126 und die zweiten Zahnräder 128, 130 mit der gleichen Geschwindigkeit und in der gleichen Richtung drehen werden. Die rotierende Bewegung der zweiten Zahnräder 128, 130 wird zu den korrespondierenden ersten Zahnrädern 88, 90 übertragen, wodurch die ersten Zahnräder 88, 90 mit gleicher Geschwindigkeit in entgegengesetzten Richtungen rotieren werden, da das Freilaufrad 132 zwischen einem Satz von ersten und zweiten Zahnrädern 88, 90, 128 130 vorhanden ist. Wenn sich die ersten Zahnräder 88, 90 und die Räder 24, 26 mit gleichen Geschwindigkeiten in entgegengesetzten Richtungen drehen, wird das Fahrzeug eine Drehung auf der Stellung um eine Welle, die direkt zwischen den beiden Rädern 24, 26 entlang der Mittellinie des Fahrzeugs 10 angeordnet ist, ausführen. Wenn die Bedienungsperson das Lenkrad 28 weiter dreht, während ihr Fuß von dem Vorwärts- und Umkehr-Pedal 40, 42 genommen ist, werden die Räder 24, 26 schneller in entgegengesetzte Richtungen drehen, wodurch das Fahrzeug 10 schneller drehen wird.

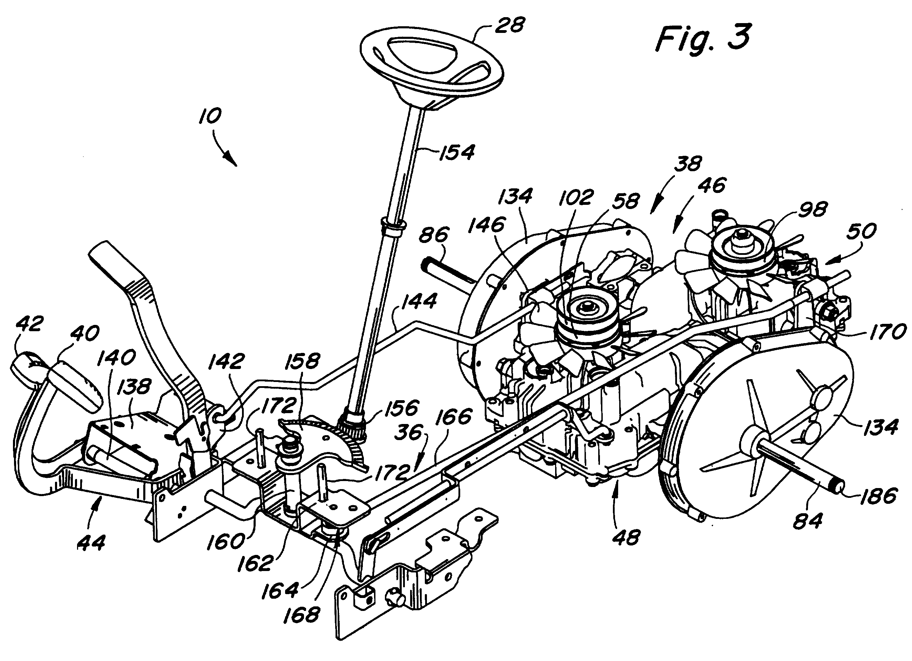

Die in der Zeichnung dargestellte Ausführungsform stellt eine Antriebseinheit 48 zur Verfügung, die einen kommerziell erhältlichen hydrostatischen Antrieb und eine Welle mit Getriebe mit einem üblichen Getriebegehäuse 248 mit ersten Zahnrädern 88, 90, die an linken und rechten Antriebswellen 84, 86 angebracht sind, umfaßt. In ähnlicher Weise ist die Lenkeinheit 50 das gleiche Modell eines kommerziell erhältlichen hydrostatischen Antriebs mit einer Welle in einem üblichen Getriebegehäuse 248 mit zweiten Zahnrädern 128, 130, die an den Lenkwellen 124, 126 angebracht sind. Die beiden Getriebegehäuse 248 sind an dem Rahmen 14 des Fahrzeugs 10 in enger Nachbarschaft angebracht, so daß die linken ersten und zweiten Zahnräder 88 und 128 kämmen können und die rechten ersten und zweiten Zahnräder 90, 130 mittels des Freilaufzahnrades 130 zusammenwirken können. Wie aus Figur 3 ersichtlich, ist das rückwärtigere Getriebegehäuse 248, das die Lenkeinheit 50 des Getriebes 46 umfaßt, um 180 Grad bezüglich der Ausrichtung des vorderen Getriebegehäuses 248, das die Antriebseinheit 48 des Getriebes 46 aufweist, gedreht. Die entsprechenden ersten Zahnräder 88, 90, zweiten Zahnräder 128, 130 und das Freilaufzahnrad 132 sind im allgemeinen in separaten Gehäusen 134 untergebracht.

Ein zweiter Typ von Antrieb-Lenk-Getriebe auf den hier als Typ Planetengetriebe 136 des Getriebes 38 Bezug genommen wird, kann ebenso mit dem Rasentraktor bzw. Fahrzeug 10, das in der Zeichnung gezeigt wird, verwendet werden. Planetengetriebe 136 können mit einer Antriebseinheit vorgesehen sein, die Antriebsenergie zu den angetriebenen Rädern 24, 26 überträgt. Ein hydrostatischer Antrieb kann wirksam mit der Antriebseinheit verbunden sein, um Antriebsenergie zu der Antriebseinheit zu übertragen. Eine variable Taumelscheibe kann in der Pumpe der Antriebseinheit, die eine Antriebssteuerung aufweist, vorgesehen sein, die durch eine Bedienungsperson verschwenkt werden kann, um die Ausgabe der Pumpe zu verändern und dadurch die Geschwindigkeit des Fahrzeugs zu beeinflussen. Planetengetriebe 136 weisen auch eine Lenkeinheit auf, die wirksam die relativen Geschwindigkeiten der Räder auf gegenüberliegenden Seiten des Fahrzeugs verändert, um hierdurch eine Fahrzeugwendung in Richtung des verlangsamten Rades auszuführen. Die Lenkeinheit kann eine hydrostatische Pumpe und einen hydrostatischen Motor mit einer Lenksteuereingangswelle aufweisen, die schwenkbar ist, um die Stellung einer Taumelscheibe einer Pumpe zu verändern, um hierdurch eine Fahrzeugwendung auszuführen.

### Pedalgestänge

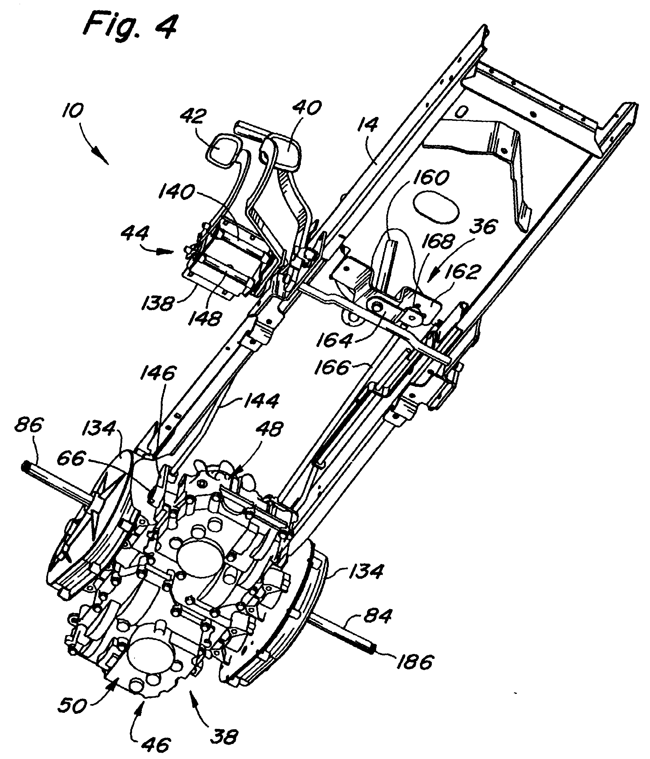

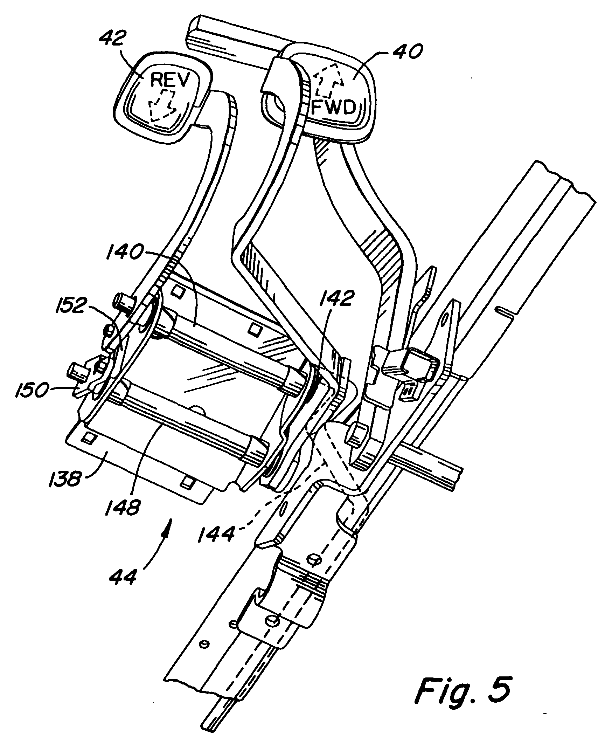

Es wird nun auf die Figuren 3, 4 und 5 Bezug genommen, in denen das Pedalgestänge 44 gezeigt wird, das daran angepaßt ist, mit dem Fahrzeug 10 entsprechend der vorliegenden Erfindung benutzt zu werden. Ein Halter 138 ist an dem Rahmen 14 des Fahrzeugs 10 angebracht und trägt schwenkbar das Vorwärts- und das Umkehr-Pedal 40, 42. Das Umkehr-Pedal 42 wird durch eine Umkehrwelle 140 getragen, die sich seitlich durch den Halter 138 erstreckt. Ein erster Hebel 142 ist an einem innere Ende einer Vorwärtswelle 148 befestigt, an der ebenso das Vorwärts-Pedal 40 befestigt ist. Eine Antriebssteuerstange 144 ist schwenkbar mit dem ersten Hebel 142 verbunden und erstreckt sich nach rückwärts zu einem Antriebssteuerhebel 146, der mit der Antriebssteuereingangswelle 66 des Getriebes 46 fest verbunden ist. Wenn die Bedienungsperson das Vorwärts-Pedal 40 nach unten drückt, schwenkt die Vorwärtswelle 148, wodurch der erste Hebel 142 und die Lenksteuerstange 44 sich nach vorne verschieben. Dies bewirkt, daß der Antriebssteuerhebel 146 und die Antriebssteuereingangswelle 66 in eine erste Richtung schwenken, wodurch die Taumelscheibe der Antriebseinheit 48 des Getriebes 46 in einen einer Vorwärtsfahrt des Fahrzeugs 10 entsprechenden Modus schaltet. Das äußere Ende der Vorwärtswelle 148 weist einen zweiten Hebel 150 auf, der mit einem unteren Ende des Umkehr-Pedals über eine Verbindung 152 verbunden ist. Wenn die Bedienungsperson das Rückwärtspedal 42 nach unten drückt, verschieben sich die Verbindung 152 und der zweite Hebel 150 nach oben. Der zweite Hebel 150 ist mit der Vorwärtswelle 148 fest verbunden, welche daher mit dem zweiten Hebel 150 als Wirkung eines Herunterdrückens des Rückwärtspedals schwenkt. Ein Schwenken der Vorwärtswelle 148 in dieser Richtung bewirkt, daß der erste Hebel 142 nach rückwärts schwenkt und die Antriebssteuerstange 144 nach rückwärts schiebt. Dies bewirkt, daß der Antriebssteuerhebel 146 und die Antriebssteuereingangswelle 66 in eine zweite Richtung verschwenken, wodurch die Taumelscheibe der Antriebseinheit 48 in einen einer Rückwärtsfahrt des Fahrzeugs 10 zugeordneten Modus schaltet.

### Lenkgestänge

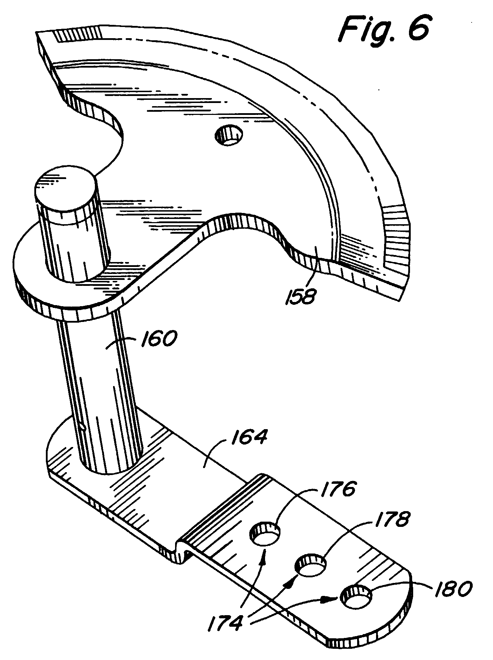

Es wird nun auf die Figur 3 Bezug genommen, in der ein Lenkrad 28 und ein Lenkgestänge 36 gezeigt werden, die an die Benutzung mit einem Fahrzeug 10 angepaßt sind. Das Lenkrad 28 ist in der Bedienerplattform 30 direkt vor dem Bedienersitz 32 angeordnet. Eine Lenkspindel 154 ist mit dem Lenkrad 28 verbunden und ein Ritzel 156 ist fest mit dem unteren Endbereich der Lenkspindel 154 verbunden. Ein Sektorzahnrad 158 greift in die Zähne des Ritzels 156 ein. Eine Sektorwelle 160 ist fest mit dem Sektorzahnrad 158 verbunden, um mit dieser während eines Lenkbetriebs zu verschwenken. Die Sektorwelle 160 wird schwenkbar durch den Rahmen 14 und einen Lenkhalter 162 getragen. Mit dem unteren Ende der Sektorwelle 160 ist ein Sektorhebel 164 fest verbunden, der mit der Sektorwelle 160 und dem Sektorzahnrad 158 verschwenkt, wenn das Lenkrad 28 gedreht wird. Das Sektorzahnrad 158, die Sektorwelle 160 und der Sektorhebel 164 können am besten aus Figur 6 ersehen werden. Eine Lenksteuerstange 166 ist schwenkbar mit einem äußeren Bereich des Sektorhebels 164 über ein Kugelgelenk 168 verbunden. Die Lenksteuerstange 166 erstreckt sich nach rückwärts zu dem Getriebe 46, wie es in Figur 3 dargestellt ist, und ist schwenkbar mit einem Lenksteuerhebel 170 verbunden, der fest mit der Lenksteuereingangswelle 92 verbunden ist. Die Lenksteuereingangswelle 92 ist aus einer neutralen Stellung in jede Richtung verschwenkbar, die mit einer Geradeausfahrt des Fahrzeugs 10 korrespondiert. Ein Verschwenken der Lenksteuereingangswelle 92 aus einer neutralen Stellung bewirkt, daß die Taumelscheibe in der Pumpe 96 der Lenkeinheit 50 in eine neue Stellung schwenkt, wodurch die Ausgabe der Pumpe 96 zur Lenkung des Fahrzeugs 10 verändert wird. Anschlagelemente 172 sind an dem Sektorhalter 162 angebracht und erstrecken sich von diesem nach oben, um an den Kanten des Sektorzahnrades 158 anzuliegen, um dadurch den Bewegungsbereich des Sektorzahnrades 158 in jeder Richtung zu begrenzen.

Die Lenksteuereingangswelle 92 weist einen Bewegungsbereich von einer bestimmten Anzahl von Grad aus ihrer neutralen Stellung in jede Richtung auf. Dieser Bewegungsbereich wird im allgemeinen durch den Bewegungsbereich der Taumelscheibe bestimmt, die sich im Innern der Lenkeinheit 50 des Getriebes 46 befindet. Die vorliegende Erfindung liefert ein Lenkgestänge 36, das einstellbar ist und das eingestellt werden kann, um einen Bewegungsbereich des Lenkrades 28 von ungefähr 135 Grad aus einer neutralen Stellung in jede Richtung vorzusehen. Das Lenkgestänge 36 gibt auch vor, daß der Bewegungsbereich des Lenkrades 28 im allgemeinen mit dem Bewegungsbereich der Lenksteuereingangswelle 92 korrespondiert.

Wie oben ausgeführt, weist die Lenksteuereingangswelle 92 einen Bewegungsbereich in jeder Richtung aus einer neutralen Stellung auf, die mit einer Geradeausfahrt des Fahrzeugs 10 korrespondiert. Der Lenksteuerhebel 170 erstreckt sich von der Lenksteuereingangswelle 92 nach oben und ist innerhalb eines Bewegungsbereichs schwenkbar, der mit dem Bewegungsbereich der Lenksteuereingangswelle 92 korrespondiert. Der obere Endbereich des Lenksteuerhebels 170 schwenkt daher in einem Bogen mit einer Länge, die durch die Gradzahl des Bewegungsbereichs der Lenksteuereingangswelle 92 und durch die Länge des Lenkhebels 170 bestimmt wird. Der rückwärtige Bereich der Lenksteuerstange 166 ist mit dem Lenksteuerhebel 170 verbunden und verschiebt sich daher in einem Bewegungsbereich, der im allgemeinen mit dem des oberen Bereichs des Lenksteuerhebels 170 identisch ist. Die Lenksteuerstange 166 ist ein steifes Element und daher verschiebt sich auch der vordere Endbereich der Lenksteuerstange 166 in dem des rückwärtigen Bereichs der Lenksteuerstange 166 gleichartigen Bewegungsbereich. Es ist offensichtlich, daß die Länge des Bogens, in dem der obere Bereich des Lenksteuerhebels 170 schwenken kann, im allgemeinen der Länge des Bogens entspricht, in der das Kugelgelenk 168 schwenkbar ist, da die Lenksteuerstange 166 steif ist und sich zwischen dem Lenksteuerhebel 170 und dem Kugelgelenk 168 erstreckt.

Die Nähe des Kugelgelenks 168 zu der Sektorwelle 160 ist wichtig bei der Bestimmung des Bewegungsbereichs des Lenkrades 28. Die maximale Bogenlänge der Bewegung des oberen Bereichs des Lenksteuerhebels 170 ist gleich der maximalen Bogenlänge der Bewegung des Kugelgelenks 168. Wenn das Kugelgelenk 168 dicht an der Sektorwelle 160 angeordnet ist, dann wird das Kugelgelenk 168 mit einem verhältnismäßig kleinen Radius um die Sektorwelle 160 verschwenken, wenn das Lenkrad 28 gedreht wird. Aufgrund des verhältnismäßig kleinen Radius muß das Kugelgelenk 168 um eine verhältnismäßig große Gradzahl verschwenken, um die Bogenlänge zu überstreichen, die benötigt wird, um den oberen Bereich des Lenksteuerhebels 170 durch seinen gesamten Bewegungsbereichs zu verschieben. Diese große Gradzahl korrespondiert mit einem verhältnismäßig großen Bewegungsbereich des Lenkrades 28. Wenn auf der anderen Seite das Kugelgelenk 168 weiter von der Sektorwelle 160 entfernt und an einer Stelle näher an dem äußeren Ende des Sektorhebels 164 angeordnet ist, dann wird das Kugelgelenk 168 um einen verhältnismäßig großen Radius um die Sektorwelle 160 schwenken, wenn das Lenkrad 28 gedreht wird. Aufgrund dieses verhältnismäßig großen Radius ist es nur notwendig, daß das Kugelgelenk 168 über eine verhältnismäßig kleine Gradzahl streicht, um die Bogenlänge zu erzielen, die benötigt wird, um den oberen Bereich des Lenksteuerhebels 170 durch seinen gesamten Bewegungsbereich zu bewegen. Die geringe Gradzahl korrespondiert mit einem verhältnismäßig geringen Bewegungsbereich des Lenkrades 28.

Der Sektorhebel 164, wie er aus Figur 6 ersehen werden kann, weist eine Mehrzahl von Öffnungen 174 auf, die darin eingeformt sind, welche an die Aufnahme des Kugelgelenks angepaßt sind. Die erste Öffnung 176 ist der Sektorwelle 160 am nächsten angeordnet und korrespondiert mit einem Bewegungsbereich des Lenkrades 28 von ungefähr 180 Grad in jeder Richtung aus der neutralen Stellung des Lenkrades 28. Die zweite Öffnung 178 ist von der Sektorwelle 160 weiter entfernt angeordnet als die erste Öffnung 176 und korrespondiert mit einem Bewegungsbereich des Lenkrades 28 von ungefähr 135 Grad. Die dritte Öffnung 180 ist weiter von der Sektorwelle 160 entfernt angeordnet als die erste und die zweite Öffnung 176 oder 178 und korrespondiert mit einem Bewegungsbereich des Lenkrades 28 von ungefähr 90 Grad. Eine Bedienungsperson positioniert das Kugelgelenk 168 in der passenden Öffnung, um hierdurch das Lenkgestänge 36 einzustellen, um einen Bewegungsbereich des Lenkrades 28 zur Verfügung zu stellen, der für diese bestimmte Bedienungsperson am bequemsten und wünschenswert ist. Andere Öffnungen könnten ebenso vorgesehen sein, welche mit anderen Bewegungsbereichen des Lenkrades 28 korrespondieren, beispielsweise eine Öffnung die dichter an der Sektorwelle 160 angeordnet ist und welche mit einer Bewegung des Lenkrades von 270 Grad aus dem Geradeausmodus korrespondiert. Die bestimmten Bewegungsbereiche des Lenkrades 28 entsprechend der vorliegenden Erfindung sind für die Einrichtung wünschenswerter Handhabungseigenschaften und Produktivität in Verbindung mit einem Gartentraktor mit vorne angeordneten Antrieb bzw. einem Fahrzeug 10 begünstigend. Die Bewegungsbereiche sind groß genug, damit sich Grundbesitzer mit dem Ansprechen der Lenkung wohl fühlen, da kleine Drehungen des Lenkrades 28 das Fahrzeug 10 nicht dazu bringen, unerwünscht scharfe Wendungen auszuführen. Das Wenden des Fahrzeugs 10 ist verhältnismäßig allmählich, wenn das Lenkrad 28 durch die Bedienungsperson gedreht wird. Wie auch immer ist der Bewegungsbereich des Lenkrades 28 nicht so groß, das es für die Bedienungsperson notwendig ist, das Lenkrad 28 um einen sehr großen Betrag zu drehen, um eine enge Wendung auszuführen. Wenn es für die Bedienungsperson notwendig ist, das Lenkrad 28 um mehrere Umdrehungen um seine Welle zu drehen, bevor das Fahrzeug 10 eine enge Wendung ausführt, leidet die Manövrierbarkeit. Der Bewegungsbereich entsprechend der vorliegenden Erfindung begründet zusammen mit dem Getriebe 38 Manövrier- und Handhabungseigenschaften, die für die meisten Bedienungspersonen wünschenswert sind.

Die Lenkeinheit 50 des Getriebes 46, die in der Zeichnung gezeigt wird, stellt eine Lenksteuereingangswelle 92 zur Verfügung, die einen Bewegungsbereich von annähernd 17 Grad in jeder Richtung von der neutralen Stellung aufweist. Der Abstand zwischen der Lenksteuereingangswelle 92 und dem rückwärtigen Bereich der Lenksteuerstange 166 beträgt 10,01 cm (3,94 inch). Der Abstand zwischen der Sektorwelle 160 und der ersten, zweiten und dritten Öffnung 176, 178, 170 beträgt jeweils ungefähr 4,22 cm, 6,30 cm, 8,41 cm (1,66 inch, 2,48 inch, 3,31 inch). Eine Öffnung die mit einer Lenkradbewegung von 270 Grad korrespondieren würde, würde sich 2,79 cm (1,1 inch) von der Lenkwelle 160 entfernt befinden. Das Sektorzahnrad 158 und das Ritzel 156 sind so gestaltet, daß eine Drehung des Lenkrades 28 um 1 Grad in einer Drehung der Sektorwelle 160 von 0,193 Grad resultiert.

Wie es in Figur 3 gesehen werden kann, sind Anschläge 172 an dem Halter 162 vorgesehen, um an den Kanten des Sektorzahnrades 172 anzuliegen, um hierdurch den Bewegungsbereich des Sektorzahnrades 158 während des Ausführens einer Wendung zu begrenzen. Die Anschläge 172 nehmen die Kraft auf, die durch die Anlage mit dem Sektorzahnrad 158 auftritt und übertragen die Kraft auf den Fahrzeugrahmen 14. Ohne diese Anschläge 172 könnte das Lenkrad 28 gedreht werden bis die innere Struktur in der Taumelscheibe der Lenkeinheit 50 die Grenzen ihres Bewegungsbereichs erreicht. Die Kräfte, die in die Struktur in dem Taumelscheibenmechanismus eingebracht würden, wären verhältnismäßig hoch; daher sind die Anschläge 172 vorgesehen, um an dem Sektorzahnrad 158 anzuliegen, wenn diese Punkte näher rücken. Daher werden die Kräfte durch die Anschläge 172 und den Rahmen 14 und im allgemeinen nicht durch die innere Struktur der Pumpe 96 der Lenkeinheit 50 absorbiert. Die Anschläge 172 hindern das Gestänge 36 daran, die äußersten Grenzen des Bewegungsbereichs der Taumelscheibe zu erreichen. Eine Mehrzahl von Öffnungen 182 kann in dem Halter 162 vorgesehen sein, um die Anschläge 172 in verschiedenen Stellungen entsprechend der Mehrzahl von Öffnungen 174, die in dem Lenkhebel 164 eingebracht sind, um das Kugelgelenk 168 in verschiedenen Stellungen anzuordnen, zu positionieren. Wenn das Kugelgelenk 168 zu einer anderen Öffnung 174 in dem Lenkhebel 164 bewegt wird, wird das Sektorzahnrad 158 einen anderen Bewegungsbereich aufweisen. Daher kann eine Neupositionierung der Anschläge 172 wünschenswert sein, wenn das Kugelgelenk 168 zu einer anderen Öffnung 174 bewegt wird.

### Wirksame Untersetzung

Wie es schematisch in Figur 2 gezeigt wird, weist jedes der zweiten Zahnräder 128, 130 einen geringeren Durchmesser als das korrespondierende erste Zahnrad 88, 90, an dem es wirksam angreift, auf. Die ersten Zahnräder 88, 90 weisen jeweils einen Durchmesser auf, der zwischen drei- und fünfmal größer ist als der Umfang des zugehörigen zweiten Zahnrads 128, 130. Genauer gesagt sind die ersten Zahnräder 88, 90 in dem bevorzugten Ausführungsbeispiel viermal größer als die zugehörigen zweiten Zahnräder 128, 130. Diese Zahnradgrößenabweichung begründet eine Untersetzung des Getriebes 38, die in wünschenswerten Handhabungs- und Lenkeigenschaften des Fahrzeugs 10 resultiert.

Die Untersetzung entsprechend der vorliegenden Erfindung bewirkt, daß die Lenkeinheit 50 des Getriebes 38 in der Lage ist, eine proportional geringere Antriebsradgeschwindigkeit zu bewirken, als die Antriebseinheit 48 zu produzieren in der Lage ist. Abgesehen davon, daß die ersten Zahnräder 88, 90 größer sind als die zweiten Zahnräder 128, 130, sind die Antriebseinheit 48 und die Lenkeinheit 50 im allgemeinen identisch. Wenn die ersten Zahnräder 88, 90 und die entsprechenden zweiten Zahnräder 128, 130 die gleiche Größe aufweisen, würden die Antriebseinheit 48 und die Lenkeinheit 50 die gleiche Übersetzung zwischen dem Antrieb 16 und den angetriebenen Rädern 24, 26 aufweisen. Die Riemenscheiben sind alle von gleicher Größe, die Pumpen 64, 96 und Motoren 68, 106 der Antriebseinheit 48 und der Lenkeinheit 50 sind von gleicher Größe und jedes Zahnrad in der Antriebseinheit 48 weist die gleiche Größe wie ein korrespondierendes Zahnrad in der Lenkeinheit 50 auf, außer daß die ersten Zahnräder 88, 90 der Antriebseinheit 48 größer sind als die zweiten Zahnräder 128, 130 der Lenkeinheit 50. Wenn die ersten Zahnräder 88, 90 von gleicher Größe wie die entsprechenden zweiten Zahnräder 128, 130 sind, dann könnte die Antriebseinheit 48 eine Maximalgeschwindigkeit erreichen, während sich das Lenkrad 28 in seiner neutralen Geradeausfahrtstellung befindet, die der Maximalgeschwindigkeit der angetriebenen Räder 24, 26 entsprechen würde, die durch ein Drehen des Lenkrades 28 bis an seine Grenzen bewirkt würde, während die Pedale 40, 42 nicht betätigt werden. Mit anderen Worten würde die maximale Drehgeschwindigkeit der Räder bei einer Geradeausfahrt der maximalen Rotationsgeschwindigkeit der angetriebenen Räder 24, 26 während des Ausführens einer Drehung auf der Stelle, während das Lenkrad 28 bis an seine Maximalgrenzen gedreht würde, ohne eine Betätigung der Pedale 40, 42 entsprechen. Jedoch sind die zweiten Zahnräder 128, 130 entsprechend der vorliegenden Erfindung kleiner als die ersten Zahnräder 88, 90 und daher wird die maximale Rotationsgeschwindigkeit, die die Lenkeinheit 50 auf die Räder 24, 26 auswirken kann, während die Pedale 40, 42 nicht gedrückt sind proportional kleiner sein, als die maximale Geschwindigkeit mit der die Antriebseinheit 48 die Räder 24, 26 während einer Geradeausfahrt rotieren lassen kann.

Dieses Übersetzungsmerkmal, das durch die Größendifferenz zwischen korrespondierenden ersten und zweiten Zahnrädern 88, 90, 128, 130 bewirkt wird, begründet mehrere Eigenschaften, die nützlich oder wünschenswert in Verbindung mit einem Gartentraktor mit einem vorn angeordneten Antrieb bzw. einem Fahrzeug 10 sind. Einer dieser Gewinne besteht darin, daß der Radius der engsten möglichen Wendungen, die ausgeführt werden können, mit der Geschwindigkeit des Fahrzeugs 10 ansteigt. Mit anderen Worten kann das Fahrzeug 10 bei niedrigen Geschwindigkeiten sehr enge Wendungen um eine vertikale Welle, die zwischen den rückwärtigen Rädern 24, 26 angeordnet ist, ausführen. Bei höheren Geschwindigkeiten können diese engen Wendungen nicht erzielt werden und der Radius der engsten Wendungen erhöht sich mit der Geschwindigkeit des Fahrzeugs 10. Wenn die Bedienungsperson das Vorwärtspedal 40 drückt, drehen beide Räder 24, 26 vorwärts in die gleiche Richtung, wie dies auch die ersten Zahnräder 88, 90 tun. Dies bewirkt, daß die zweiten Zahnräder 128, 130 mit einer Drehzahl rotieren, die viermal höher ist als die der entsprechenden zweiten Zahnräder 128, 130. Bei niedrigen Geschwindigkeiten bewirken die Pumpe 96 der Lenkeinheit 50 und der Motor 106, daß das Hohlrad 114 und das Differentialgehäuse 118 der Lenkeinheit 50 mit Geschwindigkeiten rotieren, die hoch genug sind, um eine ausreichend große Kraft an die Seitenräder 122 anzulegen, um das zweite Zahnrad 128 oder 130 auf einer Seite des Fahrzeugs 10 anzuhalten. Dies bewirkt, daß das Fahrzeug eine Wendung mit einem Nullradius um das Rad 24 oder 26 auf dieser Seite des Fahrzeugs 10 ausführt. Jedoch kann der Motor 106 bei höheren Geschwindigkeiten eines der zweiten Zahnräder 128 oder 130 nicht vollständig anhalten. Wenn die ersten Zahnräder 88, 90 von gleicher Größe sind wie die entsprechenden zweiten Zahnräder 128, 130, könnte die Pumpe 96 und der Motor 106 bewirken, daß das Hohlrad 114 und das Differentialgehäuse 118 mit einer Geschwindigkeit rotieren, die groß genug ist, um zu bewirken, daß eines der zweiten Zahnräder 128, 130 unabhängig von der Geschwindigkeit des Fahrzeugs 10 stationär wird. Jedoch sind die zweiten Zahnräder 128, 130 kleiner als die ersten Zahnräder 88, 90, wodurch die zweiten Zahnräder 128, 130 bei einer Geradeausfahrt mit höheren Drehzahlen rotieren. In der bevorzugten Ausführungsform sind die Pumpe 96 und der Motor 106 von gleicher Größe und Förderleistung wie die Pumpe 64 und der Motor 68 der Antriebseinheit 48; und da die zweiten Zahnräder 128, 130 kleiner sind als die entsprechenden ersten Zahnräder 88, 90, können die Pumpe 96 und der Motor 106 keine so hohen Drehzahlen bewirken, um ein zweites Zahnrad 128, 130 auf einer Seite des Fahrzeugs 10 anzuhalten, um eine Drehung mit einem Nullradius auszuführen, sobald sich das Fahrzeug 10 über einer bestimmten Geschwindigkeit bewegt.

Eine andere Art und Weise dieses Phänomen zu betrachten, ist es die Maximalgeschwindigkeit der Räder 24 und 26, die die Lenkeinheit 50 bewirken kann, wenn die Pedale 40, 42 nicht gedrückt sind, und die Maximalgeschwindigkeit der Räder 24, 26 zu vergleichen, die die Antriebseinheit 48 hervorrufen kann, wenn das Lenkrad 28 nicht gedreht ist. Mit anderen Worten wird die Maximalgeschwindigkeit, die durch die Lenkeinheit 50 bewirkt werden kann, mit der Maximalgeschwindigkeit, die durch die Antriebseinheit 48 hervorgerufen werden kann, verglichen. Aufgrund der 4 zu 1 Übersetzung zwischen den zweiten und den ersten Zahnrädern 88, 90, 128, 130 kann die Lenkeinheit 50 eine Maximalgeschwindigkeit begründen, wenn die Pedale 40, 42 nicht gedrückt sind, die ein Viertel der Maximalgeschwindigkeit beträgt, die durch die Antriebseinheit 48 bewirkt werden kann, wenn das Lenkrad 28 nicht gedreht ist. Wenn das Lenkrad 28 vollständig zu einer Seite gedreht ist und die Pedale 40, 42 nicht gedrückt sind, werden die Räder 24, 26 in entgegengesetzte Richtungen rotieren, um eine Drehung auf der Stelle auszuführen. Die maximale Geschwindigkeit der Räder 24, 26 in entgegengesetzten Richtungen in dieser Betriebsart beträgt ein Viertel der maximalen Geschwindigkeit der Räder 24, 26, die bei voller Wirkung der Pumpe 64 und des Motors 68 bei Geradeausfahrt begründet wird. In gewissem Sinne ist die maximale wirksame Ausgabe an die Räder 24, 26, die durch die Antriebseinheit 48 bewirkt werden kann, viermal größer als die, die durch die Lenkeinheit 50 des Getriebes 38 begründet werden kann. Bei höheren Vorwärtsgeschwindigkeiten wird die Lenkeinheit 50 nicht in der Lage sein, der Radgeschwindigkeit, die durch die Antriebseinheit 48 begründet wird, vollständig entgegenzuwirken. Bei höheren Geschwindigkeiten wird die Lenkeinheit nicht in der Lage sein, die Räder 24, 26 vollständig anzuhalten, und daher werden bei diesen Geschwindigkeiten keine Drehungen mit einem Nullradius möglich sein. Tatsächlich wird sich der Radius der engsten möglichen Wendung, die ausführbar ist, mit ansteigender Geschwindigkeit des Fahrzeugs 10 vergrößern.

In bestimmten Anwendungsfällen ist es wünschenswert, daß ein Gartentraktor bzw. ein Fahrzeug 10 nicht in der Lage ist, bei hohen Geschwindigkeiten enge Wendungen auszuführen. Das Fahrzeug 10 bleibt daher bei verhältnismäßig hohen Geschwindigkeiten stabiler und Überschläge werden mit geringer Wahrscheinlichkeit auftreten. Die oben beschriebene Üntersetzung reduziert die Fähigkeit des Fahrzeugs 10, scharfe Kurven bei hohen Geschwindigkeiten auszuführen, und die Stabilität des Fahrzeugs 10 wird dadurch erhöht.

Das Getriebe 38 entsprechend der vorliegenden Erfindung ist mit einem Gartentraktor mit einem vorne angeordneten Antrieb bzw. einem Fahrzeug 10 verbunden. Da der Antrieb 16 in der Nähe der Front des Fahrzeugs 10 und vor der Bedienerplattform 30 angeordnet ist, wird eine verhältnismäßig große Menge des Gewichts durch den vorderen Bereich des Fahrzeugs 10 getragen. Das Getriebe 38 wirkt, um das Fahrzeug 10 zu lenken, indem die rückwärtigen, angetriebenen Räder 24, 26 mit unterschiedlichen Geschwindigkeiten angetrieben werden, und das Fahrzeug 10 eine Wendung in Richtung des langsameren Rades 24 oder 26 ausführt. Ein Lenken wird daher durch die rückwärtigen Räder 24, 26 bewirkt und die vorderen Räder sind derart schwenkbar angebracht, daß sie bei Wendungen frei von Seite zu Seite schwenken können. Die rückwärtigen Räder 24, 26 müssen den vorderen Bereich des Fahrzeugs 10 zu der Seite schwenken, um eine Wendung in dieser Weise auszuführen. Die Übersetzung und die Größendifferenz zwischen den zweiten Zahnrädern 128, 130 und den entsprechenden ersten Zahnrädern 88, 90 begründen ein größeres Lenkmoment, als wenn keine Übersetzung vorhanden wäre. Dieses höhere Lenkmoment ist vorteilhaft bei einem Schwenken des vorderen Bereichs des Fahrzeugs 10 zu einer Seite, um eine Wendung auszuführen. Das verhältnismäßig hohe Drehmoment, das durch die Lenkeinheit 50 während des Ausführens einer Wendung produziert wird, welches durch die Übersetzung begründet ist, erlaubt es, daß verhältnismäßig kleine Pumpen 96 und Motoren 106 in der Lenkeinheit 50 des Getriebes wirken können.

Die Übersetzung ist ebenso vorteilhaft, um ein wünschenswertes Ansprechen der Lenkung zu begründen. Wenn die zweiten Zahnräder 128, 130 und die entsprechenden ersten Zahnräder 88, 90 von gleicher Größe wären, würden verhältnismäßig leichte Drehungen des Lenkrades 28 verhältnismäßig scharfe Wendungen bewirken. Die zweiten Zahnräder 128, 130 sind jedoch kleiner sind als die ersten Zahnräder 88, 90 und daher wird ein Drehen des Lenkrades 28 bewirken, daß die Lenkeinheit 50 die Geschwindigkeit der Räder 24, 26 weniger beeinflussen wird, als wenn die ersten und zweiten Zahnräder 88, 90, 128, 130 von gleicher Größe wären. Mit anderen Worten werden verhältnismäßig leichte Drehungen des Lenkrades 28 bewirken, daß das Fahrzeug 10 entsprechend der vorliegenden Erfindung weitere Wendungen ausführt, als wenn die ersten und zweiten Zahnräder 88, 90, 128, 130 von gleicher Größe wären. Dieses Merkmal ist vorteilhaft bei einem Einsatz mit einem Gartentraktor mit einem vorne angeordneten Antrieb bzw. einem Fahrzeug 10, da das Ansprechen der Lenkung, die durch die Übersetzung entsprechend der vorliegenden Erfindung bewirkt wird, mit dem Ansprechen der Lenkung bei konventionellen Rasentraktoren vergleichbar ist, mit denen Bedienungspersonen im allgemeinen vertraut und die ihnen bequem sind.

Die Zeichnung und die oben stehende Beschreibung zeigt zweite Zahnräder 128, 130, die kleiner sind als die ersten Zahnräder 88, 90, um eine Untersetzung zur Verfügung zu stellten, die in den zuvor detailliert beschriebenen Betriebseigenschaften resultieren. Es gibt jedoch andere Wege, um eine wirksame Untersetzung in dem Getriebe 38 zu bewirken, die in den Bereich der vorliegenden Erfindung fallen. Die verschiedenen Riemenscheiben 58, 98, 102 könnten verschiedenen Größen aufweisen, um eine wirksame Untersetzung zu bewirken, die die zuvor beschriebenen Vorteile aufweist. Beispielsweise kann die Riemenscheibe 98, die Bewegung von dem Riemen 100 zu der Hydraulikpumpe 96 der Lenkeinheit 50 überträgt, proportional kleiner ausgeführt sein, als die zweite Riemenscheibe 102, die mit der Hydraulikpumpe 64 der Antriebseinheit 64 verbunden ist. Dies würde eine wirksame Untersetzung zur Verfügung stellen, die der oben detailliert beschriebenen ähnlich ist. Die wirksame Untersetzung könnte durch eine Anzahl von Zahnrädern in dem Getriebe 38 bewirkt werden. Beispielsweise könnte das Hohlrad 114 der Lenkeinheit 50 viermal größer ausgeführt sein, als das Hohlrad 76 der Antriebseinheit 48 des Getriebes 38. Eine vergleichbare Größendifferenz zwischen einer Anzahl von verschiedenen Zahnrädern oder Kegelrädern in der Lenkeinheit 50 und des entsprechenden Zahnrades in der Antriebseinheit 48 würde eine wirksame Untersetzung, die der oben beschriebenen ähnlich ist, bewirken. Die Hydraulikpumpen 64, 96 und die Antriebe 68, 106 könnten auch unterschiedliche Größen oder Förderleistungen aufweisen, die eine wirksame Untersetzung entsprechend der vorliegenden Erfindung zur Verfügung stellen würden. Die bevorzugte Ausführungsform stellt eine einzelne Leistungsquelle bzw. einen Antrieb 16 zur Verfügung, der beide, die Antriebseinheit 48 und die Lenkeinheit 50 antreibt; aber auch alternative Ausführungsformen, die zwei Leistungsquellen mit unterschiedlichen Fördermengen für jeden einzelnen Antrieb bzw. Antriebseinheiten und Lenkeinheiten aufweisen, können wirksame Untersetzungen bewirken.

Die in der Zeichnung dargestellte Ausführungsform stellt eine Antriebseinheit 48, bestehend aus kommerziell erhältlichen hydrostatischen Getrieben und Wellen in einem üblichen Getriebegehäuse 248, mit ersten Zahnrädern 88, 90, die an den linken und rechten Antriebswellen 84, 86 angebracht sind, zur Verfügung. In ähnlicher Weise ist die Lenkeinheit 50 ein kommerziell erhältliches hydrostatisches Getriebe und eine Welle mit einem Getriebe in einem üblichen Getriebegehäuse 248, mit zweiten Zahnrädern 128, 130, die an den Lenkwellen 124, 126 angebracht sind. Die zwei Getriebegehäuse 248 sind an dem Rahmen 14 des Fahrzeugs 10 in dichter Nähe angebracht, so daß die ersten Zahnräder 88, 90 und die zweiten Zahnräder 128, 130 zusammenwirken. Die entsprechenden ersten Zahnräder 88, 90, zweiten Zahnräder 128, 130 und das Freilaufrad 132 sind im allgemeinen in getrennten Gehäusen 134 eingeschlossen. Die zweiten Zahnräder 128, 130 können in einfacher Weise eine andere Größe als die ersten Zahnräder 88, 90 aufweisen, ohne daß spezielle Veränderungen an den üblichen inneren Mechanismen in den Getriebegehäusen 248 vorgenommen werden müssen. Ein Bereitstellen der Untersetzung zwischen den ersten Zahnrädern 88, 90 und den zweiten Zahnrädern 128, 130 erlaubt daher im allgemeinen eine Verwendung kommerziell erhältlicher hydrostatischer Getriebe mit einem Minimum an Veränderungen.

Auch ein Getriebe vom Planetenradtyp könnte vorgesehen sein, um eine wirksame Untersetzung bereitzustellen, die einige oder alle der zuvor beschriebenen Merkmale und Vorteile aufweist. Eine wirksame Untersetzung könnten durch ein Planetengetriebe in jeder Zahl unterschiedlicher Wege erzielt werden, die aus Gründen der Kürze hier nicht beschrieben werden, die aber für den Fachmann ausreichend ersichtlich sind.

### Gewichtsverteilung

Es wird auf Figur 1 Bezug genommen, in der eine Seitenansicht des Fahrzeugs 10 gezeigt wird, die entsprechend zu der vorliegenden Erfindung eine bestimmte Anordnung mehrerer Fahrzeugbaugruppen darstellt. Die Anordnung der Fahrzeugbaugruppen entsprechend der vorliegenden Erfindung unterscheidet sich von der üblichen Anordnung solcher Baugruppen an üblichen von Deere & Company gefertigten Rasentraktoren, die übliche Getriebe und mechanische Lenkmechanismen aufweisen. Die bestimmte Anordnung mehrerer Fahrzeugbaugruppen entsprechend der vorliegenden Erfindung erlaubt die wirksame Verwendung eines Getriebes 38 vom Antriebs- und Lenktyp an einem Fahrzeug 10 mit vorne angeordnetem Antrieb, und bewirkt mehrere Vorteile, die das Fahrzeugverhalten, Handhabung und Stabilität eines Aufsitzrasentraktors bzw. Fahrzeugs 10 mit einem vorne angeordneten Antrieb 16 und einem Getriebe 38 betreffen, wie es im folgenden genauer beschrieben werden wird.

Der Antrieb 16 entsprechend der vorliegenden Erfindung ist vor der Bedienerplattform 30 angeordnet. Der Antrieb 16 wird durch einen vorderen Bereich des Rahmens 14 hinter den vorderen Rädern 20 getragen. Der Antrieb 16 entsprechend der vorliegenden Erfindung ist weiter hinten auf dem Rahmen 14 angeordnet, als dies bei vielen typischen, üblichen Rasentraktoren mit vorne angeordnetem Antrieb der Fall ist. Dies bewirkt, daß ein größerer Teil des Gewichts des Antriebs 16 durch die rückwärtigen Räder 24, 26 getragen wird. Der Radabstand des Fahrzeugs 10 beträgt ungefähr 1175,5 mm und der Schwerpunkt des Antriebs 16 ist ungefähr 841,6 mm vor der Welle 186 der rückwärtigen angetriebenen Räder 24, 26 angeordnet. Daher befinden sich ungefähr 71,5 % der Länge des Radabstand hinter dem Schwerpunkt des Antriebs 16. Das Fahrzeug 10 entsprechend der vorliegenden Erfindung stellt auch eine Batterie zur Verfügung, die mit dem Verbrennungsmotor bzw. dem Antrieb 16 in üblicher Weise über Kabel verbunden ist. Die Batterie 184 kann in dem Motorraum in dichter Nähe zu dem Antrieb 16 oder hinter der Bedienerplattform 30, allgemein hinter der Welle 186 der rückwärtigen, angetriebenen Räder 24, 26 angeordnet sein. Wenn sie hinter der Welle 186 der rückwärtigen Räder 24, 26 angeordnet ist, würde das Gewicht der Batterie 184 vollständig durch die rückwärtigen Räder 24, 26 getragen. Kein Teil des Gewichts der Batterie 184 würde durch die vorderen Räder 20 unterstützt.

Die Anordnung der Bedienerplattform 30 entsprechend der vorliegenden Erfindung, wie sie in Figur 1 gezeigt wird, liegt weiter zum Heck des Fahrzeugs 10 als die Bedienerplattform vieler üblicher Rasentraktoren. Der Sitz 32, auf dem die Bedienungsperson während eines Betriebes des Fahrzeugs 10 entsprechend der vorliegenden Erfindung Platz nimmt, ist weiter rückwärts angeordnet als der Sitz vieler üblicher Fahrzeuge. Die Position des Sitzes 32 ist in Längsrichtung einstellbar. Der Bewegungsbereich 32 des Sitzes 32 ist so geartet, daß nur die vorderste Stellung des Sitzes 32 darin resultieren wird, daß der Schwerpunkt einer sitzenden Bedienungsperson vor der Welle 186 der rückwärtigen Räder 24, 26 angeordnet ist. Der größte Teil des Bewegungsbereichs des Sitzes 32 wird darin resultieren, daß der Schwerpunkt der sitzenden Bedienungsperson direkt über oder hinter der Welle 186 der rückwärtigen Räder 24, 26 angeordnet ist. Wenn der Sitz 32 in einem mittleren Bereich seines Bewegungsbereichs angeordnet ist, wird der Schwerpunkt der sitzenden Bedienungsperson rückwärts der Welle 186 der rückwärtigen Räder 24, 26 angeordnet sein. Kleine Bedienungspersonen, die im allgemeinen verhältnismäßig leicht sind, könnten den Sitz 32 in seiner vordersten Stellung positionieren. Verhältnismäßig kleine und leichte Bedienungspersonen werden keine große Menge an Gewicht zu dem Vorderteil des Fahrzeugs 10 hinzufügen, da sie verhältnismäßig leicht sind. Größere Bedienungspersonen, die den Sitz 32 weiter rückwärts positionieren werden, sind im allgemeinen verhältnismäßig schwer und werden einen wesentlicheren Einfluß auf das Gesamtgewicht des Fahrzeugs 10 haben. Daher werden diese schwereren Bedienungspersonen dazu neigen, den Sitz 32 in dem mittleren oder rückwärtigen Bereich der Stellungen anzuordnen, so daß ihr Schwerpunkt hinter der Welle 186 der rückwärtigen Räder 24, 26 sein wird. Das wird darin resultieren, daß ihr Gewicht im allgemeinen vollständig durch die rückwärtigen Räder 24, 26 getragen wird.

Da die Bedienerplattform 30 weiter hinten auf dem Fahrzeug 10 vorgesehen ist, als bei vielen üblichen Rasentraktoren, wird ein großer Teil des Gewichts der verschiedenen Baugruppen in der Bedienerplattform 30, wie das Lenkrad 28, die Lenkspindel 154, eine Lenkkonsole 188 und andere Fahrzeugsteuerungen durch die rückwärtigen Räder 24, 26 getragen.

Das Getriebe 38, das entsprechend der vorliegenden Erfindung verwendet wird, ist auch in solcher Art und Weise ausgerichtet und angeordnet, um zu bewirken, daß die rückwärtigen Räder 24, 26 ein größeres Gewicht als die vorderen Räder 20 tragen. Die Antriebseinheit 48 des Getriebes 46 ist allgemein direkt zwischen den rückwärtigen, angetriebenen Rädern 24, 26 und allgemein entlang der Welle 186, die sich zwischen den rückwärtigen Rädern 24, 26 erstreckt, angeordnet. Die Lenkeinheit 50 des Getriebes 46 ist rückwärts der Antriebseinheit 48 positioniert und ist daher hinter der Welle 186 der rückwärtigen Räder 24, 26 angeordnet. Die Position der Lenkeinheit 50 hinter der Welle 186 der rückwärtigen Räder 24, 26 dient dazu, ein größeres Gewicht auf den rückwärtigen Rädern 24, 26 zu plazieren, und neigt dazu kein Gewicht auf den vorderen Räder hinzuzufügen.

Wie es in Figur 1 gesehen werden, ist der Kraftstofftank 190 entsprechend der bevorzugten Ausführungsform am Heck des Fahrzeugs 10 hinter der Welle 186 der rückwärtigen Räder 24, 26 angeordnet. Viele übliche Gartentraktoren positionieren den Kraftstofftank vor der Bedienerplattform in unmittelbarer Nähe des Antriebs und innerhalb des Motorraums oder einer Haube. Die Position des Kraftstofftanks 190 entsprechend der vorliegenden Ausführungsform hinter der Bedienerplattform 30 und der Welle 186 der rückwärtigen Räder 24, 26 dient dazu, das Gewicht des Kraftstoffs und des Kraftstofftanks 190 zu den rückwärtigen Rädern 24, 26 und nicht zu den vorderen Rädern 20 zu verteilen. Dies erhöht den Anteil an Fahrzeuggewicht, der durch die rückwärtigen Räder 24, 26 getragen wird.

Fahrzeugbaugruppen, die rückwärts der rückwärtigen Welle 186 angeordnet sind, dienen dem Zweck, die ganze Menge ihres Gewichts so auszurichten, daß es durch die rückwärtigen Räder 24, 26 getragen wird. Dadurch, daß sie hinter der rückwärtigen Welle 186 des Fahrzeugs 10 angeordnet sind, dienen sie auch dazu einiges des Gewichts, das ansonsten durch die vorderen Räder getragen würde, so zu verschieben, das es durch die rückwärtigen Räder 24, 26 getragen wird. Gewicht, das hinter den rückwärtigen Rädern 24, 26 angeordnet ist, neigt dazu, das vordere Ende um die Welle 186 der rückwärtigen Räder 24, 26 wirksam anzuheben. Die vorderen Räder werden durch diesen Effekt nicht wirklich vom Untergrund abgehoben, sondern es wird nur einiges des Gewichts, das ansonsten durch die vorderen Räder 20 getragen wird, durch die rückwärtigen Räder 24, 26 aufgenommen.

Die oben beschriebene Anordnung verschiedener Fahrzeugbaugruppen wie dem Kraftstofftank 190, der Batterie 184, dem Antrieb 16, dem Mähwerk 12, der Bedienerplattform 30 und dem Sitz 32 dient dem Zweck, die Verteilung des Gewichts einer Bedienungsperson und des Fahrzeugs zwischen dem vorderen und dem rückwärtigen Paar von Rädern 20, 22 und 24, 26 zu optimieren. Genauer gesagt, dient die Anordnung der Fahrzeugbaugruppen dazu, eine Gewichtsverteilung von ungefähr 75% des Fahrzeug- und Bedienungspersongewichts auf dem Paar rückwärtiger Räder 24, 26 und ungefähr 25% des Fahrzeug- und Bedienungspersongewichts auf dem vorderen Paar von Rädern 20, 22 zu erzielen. Diese Art von Gewichtsverteilungen verbessert die Handhabbarkeit und die Stabilität des Fahrzeugs 10 und erlaubt es dem Fahrzeug 10 gut zu funktionieren, während ein Getriebe 38 vom Antriebs- und Lenktyp eingesetzt wird. Das Getriebe 38, das in der bevorzugten Ausführungsform eingesetzt wird, erfordert, daß eine große Menge an Gewicht an den angetriebenen Rädern 24, 26 angelegt wird, damit die passende Traktion zwischen den angetriebenen Rädern 24, 26 und dem Untergrund erreicht wird. Wenn keine ausreichende Traktion der angetriebenen Räder 24, 26 vorliegt, könnten die angetriebenen Räder 24, 26 durchdrehen, was die Bewegung des Fahrzeugs 10 beeinträchtigen könnte. Darüber hinaus würde ein Traktionsverlust der angetriebenen Räder 24, 26 die Lenkung des Fahrzeugs 10 verschlechtern, da das Fahrzeug 10 durch ein Antreiben der rückwärtigen, angetriebenen Räder 24, 26 mit unterschiedlichen, wirksamen Geschwindigkeiten gelenkt wird. Daher erfolgt die Anordnung der verschiedenen Baugruppen entsprechend der bevorzugten Ausführungsform derart, daß eine verhältnismäßige große Prozentzahl des Fahrzeug- und Bedienungspersonengewichts auf dem rückwärtigen Paar angetriebener Räder 24, 26 plaziert ist.

Eine passende Menge von Gewicht muß auch von dem vorderen Paar von Räder 20, 22 getragen werden, damit das Fahrzeug 10 gut funktioniert. Wenn sehr wenig Gewicht durch das vordere Paar von Rädern 20, 22 getragen wird, würde der Vorderteil des Fahrzeugs 10 sehr leicht, wodurch das Fahrzeug 10 nach rückwärts um die Welle 186 der rückwärtigen Räder 24, 26 kippen kann, beispielsweise wenn ein Hang hinauf gefahren wird. Wenn der Vorderteil des Fahrzeugs 10 zu leicht ist, könnte das Fahrzeug 10 instabil werden. Eine größere Menge von Gewicht auf den vorderen Rädern 20, 22 wird allgemein die Fahrzeugstabilität in dieser Hinsicht vergrößern. Wenn jedoch zu viel Gewicht auf den vorderen Rädern 20, 22 angeordnet ist, könnte es für die rückwärtigen Räder 24, 26 schwierig werden, den Vorderteil des Fahrzeugs 10 herum zu schwenken, um eine Wendung auszuführen. Wenn der Vorderteil des Fahrzeugs 10 verhältnismäßig schwer ist, wird eine große Kraft benötigt, um den Vorderteil des Fahrzeugs 10 zur jeweiligen Seite zu schwenken, um eine Wendung auszuführen. Um diese große Kraft aufzubringen, muß das Getriebe 38 groß genug ausgeführt sein, um eine solch große Kraft anzulegen und die Traktion zwischen den angetriebenen Rädern 24, 26 und dem Untergrund muß verhältnismäßig hoch sein. Daher erlaubt ein verhältnismäßig leichtes Vorderteil der Lenkeinheit 50 des Getriebes 45 kleiner und schwächer und weniger teuer ausgeführt zu sein, und würde es dem Fahrzeug 10 erlauben, Wendungen selbst bei verhältnismäßig geringer Traktion zwischen den angetriebenen Rädern 24, 26 und dem Untergrund auszuführen. In diesem Sinne würde ein verhältnismäßig leichtes Vorderteil vorteilhaft sein, da solch ein Fahrzeug 10 für die rückwärtigen Räder 24, 26 leichter zu schwenken wäre.

Die oben genannten Faktoren in Betracht ziehend, wird eine optimale Menge an Gewicht auf das vordere Paar 20, 22 entsprechend der bevorzugten Ausführungsform aufgebracht, so daß der Vorderteil des Fahrzeugs 10 leicht genug ist, damit die rückwärtigen, angetriebenen Räder 24, 26, den Vorderteil während des Ausführens einer Wendung schwenken, und so daß der Vorderteil schwer genug ist, um jede Tendenz des Fahrzeugs 10 zu reduzieren nach rückwärts zu kippen, wenn ein Hang geradeaus hinaufgefahren wird. Es wird eine optimale Gewichtsverteilung von ungefähr 75% auf den rückwärtigen Rädern 24, 26 und 25% auf dem vorderen Paar von Rädern 20, 22 dargestellt. Ein Bereich zwischen 70% bis 80% des Fahrzeug- und Bedienungspersonengewichts auf den rückwärtigen Rädern 24, 26 und von 20% bis 30% auf den vorderen Rädern 20, 22 wird für akzeptabel gehalten.

Das Fahrzeug 10 wird vorstehend mit Baugruppen beschrieben, die so angeordnet sind, daß dies in einer gewünschten Gewichtsverteilung zwischen den vorderen Rädern 20 und den rückwärtigen Rädern 24, 26 resultiert. Es könnten auch Gewichte zu bestimmten Bereichen des Fahrzeugs 10 hinzugefügt werden, um zu helfen, die passende Gewichtsverteilung zwischen den vorderen Rädern 20, 22 und den rückwärtigen Rädern 24, 26 zu erzielen. Zu dem rückwärtigen Bereich des Rahmens 14 des Fahrzeugs 10 hinzugefügtes Gewicht hinter der rückwärtigen Welle 186 würde Gewicht auf den rückwärtigen Rädern 24, 26 hinzufügen und das durch den Vorderteil des Fahrzeugs 10 getragene Gewicht reduzieren.

Die bevorzugte Ausführungsform stellt Fahrzeugkomponenten zur Verfügung, die an bestimmten Bereichen angeordnet sind, die von der Anordnung dieser Baugruppen an vielen üblichen Rasentraktoren abweichen. Die Anordnung und Plazierung der Fahrzeugbaugruppen an vielen üblichen Rasentraktoren begründet ein verhältnismäßig großes Gewicht an dem Vorderteil des Fahrzeugs, da der Antrieb, die Batterie und der Kraftstofftank an dem Vorderteil des Fahrzeugs, vor der Bedienerplattform angebracht sind. Die Anordnung des Mähwerks und auch die Anordnung des Bedienersitzes, die den Schwerpunkt der Bedienungsperson vor der Welle 186 der rückwärtigen Räder anordnet, trägt dazu bei, einen verhältnismäßig großen Teil des Gewichts auf die vorderen Räder üblicher Rasentraktoren aufzubringen. Die Anordnung der Fahrzeugbaugruppen an vielen üblichen Rasentraktoren begründet einen verhältnismäßig schweren Vorderteil und ein verhältnismäßig leichtes Heck, was allgemein bei üblichen Lenkungen, die schwenkbare vordere Räder verwenden angebracht ist, was aber bei der Verwendung eines Getriebes vom Antriebs- und Lenktyp, das das Fahrzeug durch ein Antreiben der rückwärtigen Räder mit unterschiedlichen Relativgeschwindigkeiten lenkt, nicht passend ist. Die bestimmte Anordnung und Plazierung der Fahrzeugbaugruppen entsprechend der vorliegenden Erfindung begründet eine Gewichtsverteilung zwischen dem vorderen Paar von Rädern 20 und dem rückwärtigen Paar von Rädern 24, 26, die es erlaubt, daß ein Getriebe 38 vom Antriebs- und Lenktyp wirksam an einem Fahrzeug 10 mit rückwärtigen, angetriebenen Rädern und einem vorn angebrachten Antrieb 16, der durch einen Rahmen 14 vor der Bedienerplattform 30 getragen wird, eingesetzt wird. Die vorgenannte Gewichtsverteilung, die durch die Anordnung und Plazierung der Baugruppen, wie sie oben beschrieben wurde, erlaubt es einem Aufsitzrasentraktor bzw. einem Fahrzeug 10 mit einem vorne angebrachten Antrieb 16, wirksam durch den Antrieb der rückwärtigen Räder 24, 26 mit unterschiedlichen Relativgeschwindigkeiten gelenkt zu werden.

Die Verwendung eines Getriebes 38 vom Antriebs- und Lenktyp an einem Aufsitzrasentraktor mit vorn angeordnetem Antrieb 16 bzw. einem Fahrzeug 10 wird die Manövrierbarkeit dieser Art von Rasentraktor verbessert. Traktoren mit vorn angeordnetem Antrieb mit üblichen Getrieben und Fahrzeuge 10 mit Getrieben 38 vom Antriebs- und Lenktyp entsprechend der vorliegenden Erfindung werden übliche und/oder ähnliche Teile aufweisen. Eine Übereinstimmung von Teilen zwischen üblichen Rasentraktoren mit vorn angebrachtem Antrieb und Fahrzeugen 10 entsprechend der vorliegenden Erfindung wird in einer günstigen Wirtschaftlichkeit resultieren, die im allgemeinen die Fertigungskosten beider Arten von Rasentraktoren mit vorn angebrachtem Antrieb bzw. Fahrzeugen reduzieren wird. Verbraucher sind im allgemeinen an Rasentraktoren mit vorn angebrachten Antrieben gewöhnt bzw. wissen mit ihnen umzugehen, und viele Verbrauchen empfinden, daß Rasentraktoren mit vorn angebrachten Antrieben der wünschenswerteste Typ von Rasentraktor, der kommerziell erhältlich ist, sind. Ein Zur-Verfügung-Stellen eines Rasentraktors mit vorn angebrachtem Antrieb mit erhöhter Manövrierbarkeit in Verbindung mit einem Antriebs- und Lenkgetriebe wird es vielen Verbrauchern erlauben, den Typ von Traktor mit einer größeren Manövrierbarkeit als bei üblichen Rasentraktoren zu kaufen, denn sie am wünschenswertesten finden.

### Rückwärtslenkmechanismus

Wie oben detailliert beschrieben, wirkt die Lenkeinheit 50 des Getriebes 38 mit der Antriebseinheit 48 des Getriebes 38 zusammen, um die Geschwindigkeit des Antriebsrades 24 oder 26 auf einer Seite des Fahrzeugs 10 zu erhöhen und um die Geschwindigkeit des Antriebsrads 24 oder 26 auf der anderen Seite des Fahrzeugs 10 zu verringern, um dadurch eine Fahrzeugwendung zu der Seite des Fahrzeugs 10 auszuführen, die das langsamere Rad 24 oder 26 aufweist. Beispielsweise ist das Vorwärts-Pedal 40 gedrückt, wenn vorwärts gefahren wird, wodurch die Taumelscheibe der Antriebseinheit 48 verschwenkt und Leistung an den Motor 68 übertragen wird, welcher wiederum wirksam das Hohlrad 76, das Gehäuse 78 und die Antriebswellen 84, 86 der Antriebseinheit 48 antreibt. Dies bewirkt, daß die angetriebenen Räder 24, 26 in einer Vorwärtsrichtung rotieren. Wenn das Lenkrad 28 durch eine Bedienungsperson während einer Fahrzeugvorwärtsfahrt gedreht wird, schwenkt der Sektorarm 164 so wie das Lenkrad 28 schwenkt, wodurch wiederum die Taumelscheibe der Lenkeinheit 50 schwenkt und Leistung an den Motor 106 der Lenkeinheit 50 überträgt. Rotationsbewegung wird von dem Motor 106 zu dem Hohlrad 114 übertragen. Die Lenkwellen 124, 126 werden bereit in entgegengesetzte Richtungen gedreht, da sie wirksam mit den rotierenden ersten Zahnrädern 88, 90 über die Zahnradzähne und das Freilaufzahnrad 132 verbunden sind. Wenn das Hohlrad 114 und das Gehäuse 118 rotieren, rotieren die Planetenräder 120 in dem Gehäuse 118. Die Rotation des Gehäuses 118 und der Planetenräder 120 wird Geschwindigkeit zu der Lenkwelle 124 oder 126 der Lenkeinheit 50 hinzufügen, die in die gleiche Richtung wie das Gehäuse 118 und die Planetenräder 120 rotiert, und wird die Geschwindigkeit der Lenkwelle 124 oder 126 verringern, die in die entgegengesetzte Richtung wie das Gehäuse 118 und die Planetenräder 120 rotiert. Diese Erhöhungen und Verringerungen an Rotationsenergie der Lenkwellen 124, 126 werden an die Antriebswellen 84, 86 über die zweiten Zahnräder 128, 130 und die ersten Zahnräder 88, 90, die wirksam miteinander kämmen, übertragen. Daher wird das angetriebene Rad 24 oder 26 auf der Seite der Lenkwelle 124 oder 126, deren Geschwindigkeit erhöht wird, beschleunigt werden, und das angetriebene Rad 24 oder 26 auf der Seite der Lenkwelle 124 oder 126, deren Geschwindigkeit verringert wird, langsamer werden. Das Differential 52 der Antriebseinheit 48 erlaubt es, daß diese Differenz an den angetriebenen Räder 24, 26 auftreten kann.

Das Lenkgestänge und das Getriebe 46, die in den Figuren 1 - 6 dargestellt sind, sind so entworfen, daß wenn das Lenkrad 28 während einer Vorwärtsfahrt nach links gedreht wird, die Lenkeinheit 50 des Getriebes 46 bewirkt, daß das linke angetriebene Rad 26 verlangsamt und das rechte angetriebene Rad 24 beschleunigt wird, was in einer Wendung nach links in die Richtung, in die das Lenkrad 28 verschwenkt wird, wenn in Vorwärtsrichtung gefahren wird, resultiert. Dies ist ähnlich zur Lenkung eines Kraftwagens. Jedoch wird das Fahrzeug 10, wenn das Fahrzeug 10, wie in den Figuren 1- 6 in Rückwärtsrichtung gefahren wird, nicht in einer Art und Weise lenken, die einem Kraftwagen oder einem üblichen gelenkten Rasentraktor ähnlich ist.

Während eines Betriebs in Rückwärtsrichtung wird das Umkehr-Pedal 42 durch die Bedienungsperson heruntergedrückt, wodurch die Taumelscheibe in einem Rückwärtsmodus rotiert, wodurch der Motor 68 die Ausgangswelle 70 in Rückwärtsrichtung dreht. Dies bewirkt, daß das Hohlrad 76 der Antriebseinheit 48 in Rückwärtsrichtung drehen und die Antriebswellen 84, 86 und die antriebenen Räder 24, 26 rotieren in Rückwärtsrichtung. Wenn das Lenkrad 28 gedreht wird, schwenkt die Taumelscheibe der Lenkeinheit 50, wodurch Rotationsenergie von der Pumpe 96 der Lenkeinheit 50 zu dem Motor 106 übertragen wird. Diese Rotationsbewegung wird wirksam zu dem Hohlrad 114 übertragen, welches beginnen wird zu rotieren. Die Lenkwellen 124, 126 rotieren bereits in entgegengesetzte Richtungen, da das rechte zweite Zahnrad 130 mit dem Freilaufzahnrad 132 kämmt und das linke zweite Zahnrad 128 direkt mit dem rechten ersten Zahnrad 90 kämmt, das in der der Fahrtrichtung entgegengesetzten Richtung rotiert. In der umgekehrten Fahrtrichtung rotieren die Lenkwellen 124, 126 in den Richtungen, in denen sie rotieren, wenn das Fahrzeug 10 in Vorwärtsrichtung fährt, entgegengesetzten Richtungen. Während einer Rückwärtsfahrt wird die Geschwindigkeit der Lenkwellen 124, 126, die in die gleiche Richtung rotiert wie das Gehäuse 118, ihre Geschwindigkeit in Rückwärtsrichtung erhöhen, und die Geschwindigkeit der Lenkwelle 124, 126, die in dem Gehäuse 118 entgegengesetzter Richtung rotiert, wird ihre Geschwindigkeit in Rückwärtsrichtung verringern. Das Fahrzeug 10 wird dadurch eine Wendung um das verlangsamte Rad 24 oder 26 ausführen. Da aber, wenn in Rückwärtsrichtung gefahren wird, die Lenkwellen 124, 126 in eine Richtung rotieren, die der Richtung, in der sie während einer Vorwärtsfahrt drehen, entgegengesetzt ist, wird das Rad 24, oder 26, das in Vorwärtsrichtung beschleunigt wird, wenn das Lenkrad 28 in eine bestimmte Richtung gedreht wird, seine Geschwindigkeit verringern, wenn das Fahrzeug 10 in Rückwärtsrichtung fährt. Daher wird, wenn das Fahrzeug 10 in Rückwärtsrichtung fährt und das Lenkrad 28 nach links gedreht wird, die Geschwindigkeit des rechten Rads 24 nach rückwärts verlangsamt werden, und die Geschwindigkeit des linken Rades 26 nach rückwärts erhöht werden, wodurch das Fahrzeug 10 in Rückwärtsrichtung zur rechten Seite der Bedienungsperson drehen wird. Wenn das Fahrzeug 10 in Rückwärtsrichtung fährt und das Lenkrad 28 nach rechts gedreht wird, wird die Geschwindigkeit des rechten Rades 24 in Rückwärtsrichtung verringert und die Geschwindigkeit des linken Rades 26 nach rückwärts erhöht, wodurch das Fahrzeug 10 in Rückwärtsrichtung zur linken Seite der Bedienungsperson wendet. Das in den Figuren 1- 6 gezeigte Fahrzeug 10 lenkt in Rückwärtsrichtung daher nicht in einer Art und Weise, die einem Kraftwagen oder einem in üblicher Weise gelenkten Rasentraktor ähnelt, welche eine Wendung zur linken Seite der Bedienungsperson ausführen, wenn das Lenkrad bei Rückwärtsfahrt nach links gedreht wird, und welche eine Wendung zur rechten Seite der Bedienungsperson ausführen, wenn das Lenkrad während einer Rückwärtsfahrt nach rechts gedreht wird.

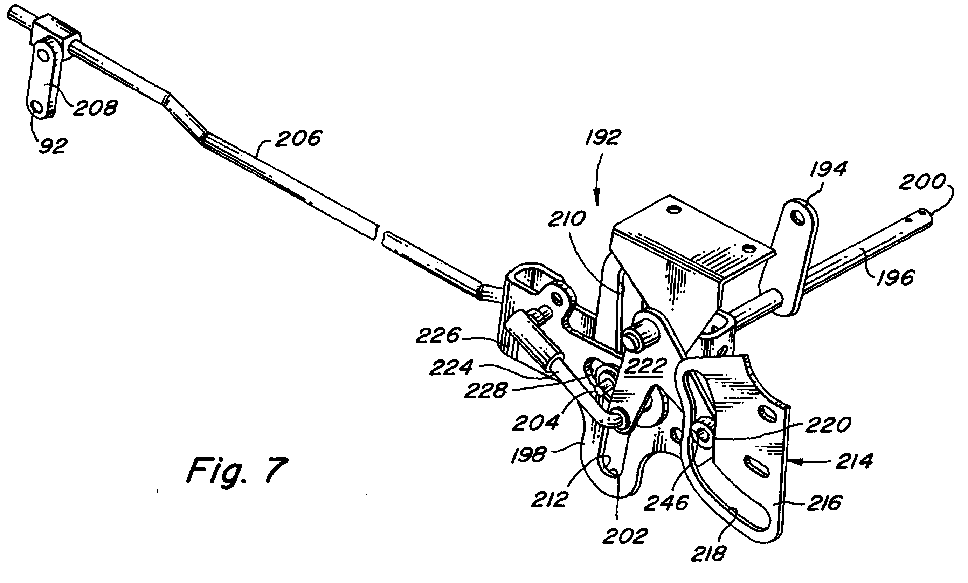

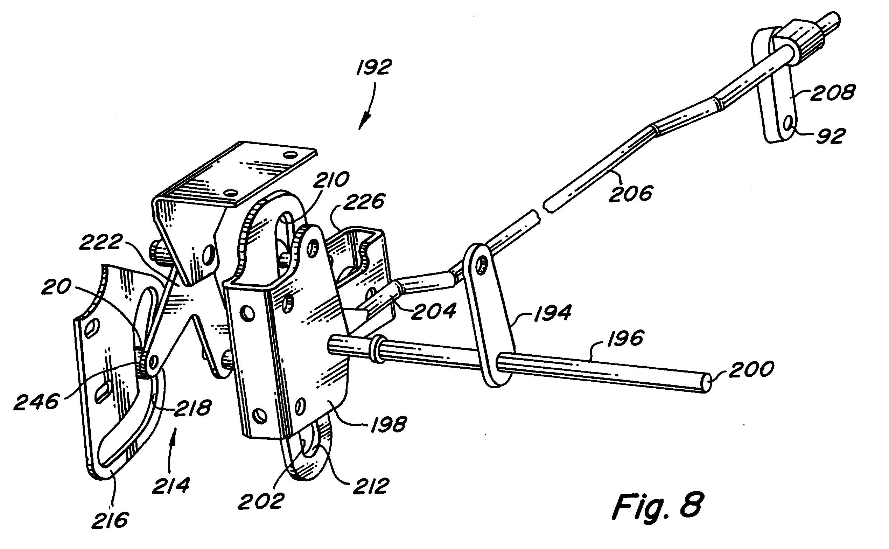

Es wird nun auf die Figuren 7 - 11 Bezug genommen, in denen eine Einrichtung gezeigt wird, welche an einem Fahrzeug 10, wie es in den Figuren 1- 6 gezeigt wird, verwendet werden kann, um die Lenklogik bei Rückwärtsfahrt derart zu verändern, daß das Fahrzeug 10 bei einer Rückwärtsfahrt in einer Weise wendet, die einem Kraftwagen oder einem in üblicher Weise gelenkten Rasentraktor ähnelt.

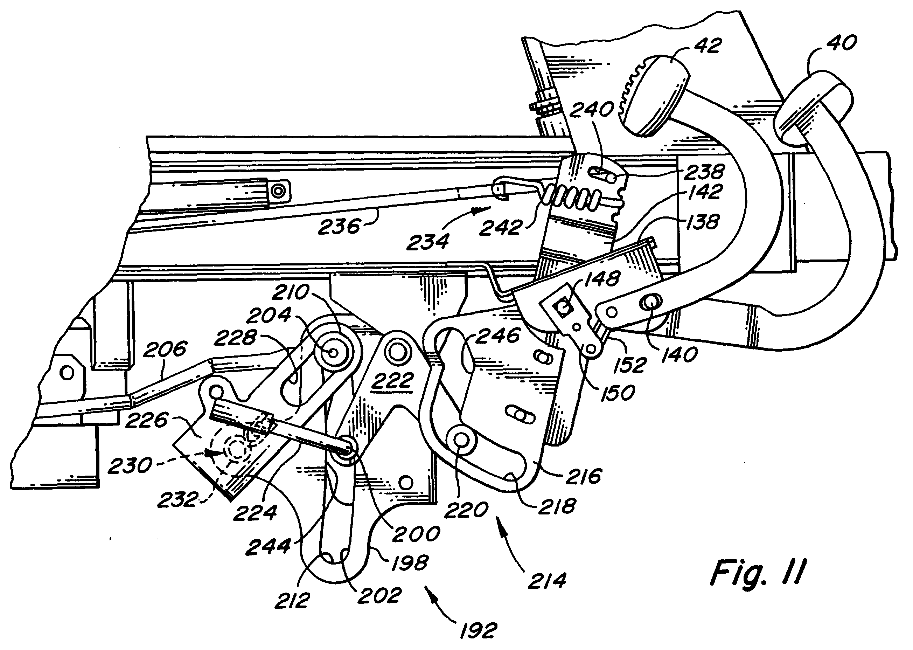

Die Figuren 7 - 11 zeigen einen Teil des Lenkgestänges oder einer Lenkeinrichtung 192, die sich wirksam von dem Lenkmittel oder dem Lenkrad 28 zu der Lenksteuereingangswelle 104 der Lenkeinheit 50 des Getriebes 46 erstreckt. Ein Lenkhebel 194 ist wirksam mit dem Lenkhebel 164 verbunden, um als Antwort auf eine Schwenkbewegung des Lenkrades 28 zu schwenken. Ein Stangenelement 196 ist an dem Lenkhebel 194 angebracht und ist fest mit einem Nockenelement 198 verbunden. Das Nockenelement 198 ist um eine Schwenkachse 200 schwenkbar, die durch das Stangenelement 196 bestimmt wird. Das Nockenelement 198 bestimmt einen gebogenen Schlitz 202, in dem ein Endbereich 204 eines in den Ansprüchen Übertragungsmittel genannten, länglichen Elements 206 aufgenommen wird. Das längliche Element 206 erstreckt sich von dem Schlitz 202 in dem Nockenelement 198 nach rückwärts und weist ein rückwärtiges Ende auf, das schwenkbar mit einem Hebel 208 verbunden ist, welcher mit der Lenkeingangssteuerwelle 104 der Lenkeinheit 50 des Getriebes 46 verbunden ist. Während einer Vorwärtsfahrt ist das längliche Element 206 in einem oberen Endbereich 210 des Schlitzes 202 angeordnet, wie es in Figur 11 dargestellt ist. Wenn das Lenkrad 28 durch die Bedienungsperson gedreht wird, schwenken der Lenkhebel 194, das Stangenelement 196 und das Nockenelement 198 um die Schwenkachse 200, die durch die Achse des Stangenelements 196 in einer Stellung, wie sie in Figur 11 dargestellt wird, bestimmt wird. Ein Verschwenken des Nockenelement 198 bewirkt, daß das längliche Element 206 in Längsrichtung allgemein entlang seiner Längswelle gedrückt oder gezogen wird, wodurch der Arm 208 schwenkt und die Lenksteuereingangswelle 104 bewegt. Dies bewirkt, daß die Lenkeinheit 50 eingerückt wird, wodurch eine Fahrzeugwendung ausgeführt wird. Während einer Fahrzeugfahrt in die umgekehrte Richtung ist der vordere Endbereich 204 des länglichen Elements 206 in einem unteren Endbereich 212 des Schlitzes 202 in dem Nockenelement 198 angeordnet. In dieser Stellung befindet sich das längliche Element 206 auf der entgegengesetzten Seite der Schwenkachse 200 und so wird, wenn das Nockenelement 198 schwenkt, wenn das Lenkrad 28 durch die Bedienungsperson gedreht wird, das längliche Element 206, in einer Richtung verschoben, die der Richtung, in der es sich verschoben hätte, wenn das längliche Element 206 in dem oberen Endbereich 210 des Schlitzes 202 angeordnet wäre, entgegengesetzt ist.

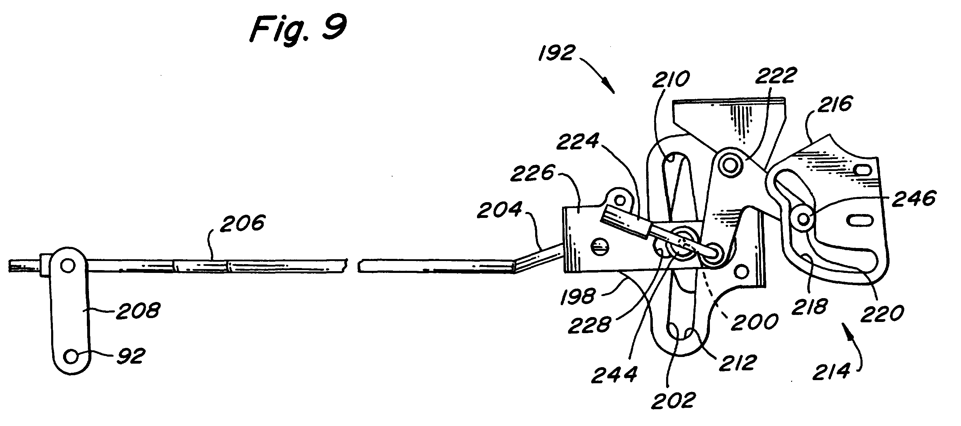

Die in den Figuren 7 - 11 gezeigte Einrichtung stellt auch eine Betätigungseinrichtung 214 zur Verfügung, welche dazu dient, den vorderen Endbereich 204 des länglichen Elements 206 zwischen verschiedenen Anordnungen in dem Schlitz 202 des Nockenelements 198 zu verschieben. Ein Betätigungsmittel 216 ist wirksam mit der Unterseite des Vorwärts-Pedals 40 verbunden, welches einen Teil des Pedalgestänges bildet. Das Betätigungsmittel 216 weist eine Kurvenoberfläche bzw. einen Schlitz 218 auf, an dem ein Kurvenfolger 220 anliegt. Der Kurvenfolger 220 ist mit einem Hebelelement 222 verbunden, welches schwenkbar an dem Fahrzeug 10 vorgesehen ist. Mit dem Hebelelement 222 ist ein Verbindungselement 224 verbunden, welches schwenkbar durch ein Schaltelement 226 gehalten wird. Das Schaltelement 226 wird schwenkbar durch das Nockenelement 198 getragen und weist einen Schlitz 228 auf, durch den der Endbereich 204 des länglichen Elements 206 aufgenommen wird. Ein Federmechanismus 230, welcher eine Torsionsfeder 232 aufweist, ist an dem Schaltelement 226 angebracht, um das Schaltelement 226 und das längliche Element 206 in Richtung einer Neutralstellung mit Bezug auf das Nockenelement 198 und den Schlitz 202 zu belasten, wie es in Figur 9 dargestellt ist, welches das längliche Element 206 allgemein direkt mit der Schwenkachse 200 des Nockenelements 198 ausgerichtet anordnet.

Wie es in Figur 11 dargestellt wird, ist ein Antriebsgestänge 234 vorgesehen, das sich von den Pedalen 40, 42 nach rückwärts erstreckt. Das Antriebsgestänge 234 weist ein Stangenelement 236 mit einem rückwärtigen Endbereich auf, der an einem Arm angreift, der mit der Antriebssteuereingangswelle 66 verbunden ist. Der vordere Bereich bzw. Antriebshebel 238 des Stangenelements 236 wird durch einen Schlitz 240 aufgenommen, der in dem ersten Hebel 142 des Pedalsystems bestimmt ist. Eine Spannfeder 242 erstreckt sich zwischen dem ersten Hebel 142 und einem Bereich des Stangenelements 236, um das Stangenelement 236 in Richtung des rückwärtigen Endes des Schlitzes 240 zu belasten.

Als nächstes soll die Funktionsweise des Rückwärtslenkmechanismus genauer beschrieben werden. Wenn die Bedienungsperson keines der Pedale 40 oder 42 herunterdrückt, befindet sich das Lenkgestänge 192 in der in Figur 9 gezeigten Anordnung. Der vordere Endbereich 204 des länglichen Elements 206 ist in einem zentralen Bereich 244 des Schlitzes 202 des Nockenelements 198, und allgemein mit der Welle des Nockenelements 198 ausgerichtet, angeordnet. Wenn die Bedienungsperson in diesem Modus das Lenkrad drehen würde, würden der Lenkhebel 194, das Stangenelement 196 und das Nockenelement 198 verschwenken, aber das längliche Element 206 würde sich nicht in Längsrichtung verschieben, da es mit der Schwenkachse 200 des Nockenelements 198 ausgerichtet ist. Dieses Merkmal ist vorteilhaft, da eine Bedienungsperson davon abgehalten wird, das Fahrzeug 10 zu lenken, während sie neben dem Fahrzeug 10 steht. Ohne dieses Merkmal könnte eine Bedienungsperson neben dem Fahrzeug 10 stehen und das Lenkrad 28 drehen, wodurch der Vorderteil des Fahrzeugs 10 dazu gebracht werden könnte, herum zu schwenken, um eine Drehung auf der Stelle auszuführen.

Wenn die Bedienungsperson beginnt vorwärtszufahren, wird sie das Vorwärts-Pedal 40 herunterdrücken, wodurch sich der erste Hebel 142 nach rückwärts schiebt, bis das Stangenelement 236 an dem vorderen Ende Schlitzes 240 anliegt, zu welcher Zeit das Stangenelement 236 beginnt, sich nach rückwärts zu verschieben, um die Antriebseinheit 48 zu betätigen und die Räder 24, 26 in Vorwärtsrichtung anzutreiben. Das Betätigungsmittel 216 schwenkt nach rückwärts in Antwort darauf, daß das Vorwärtspedal 40 nach vorn gedrückt wird. Dies bewirkt, daß der Kurvenfolger 220, der in dem Schlitz 218, der in das Betätigungsmittel 216 eingeformt ist, sich in Eingriff mit einem mittleren Bereich 246 des Schlitzes 218 nach rückwärts verschiebt. Dies schwenkt das Hebelelement 222 nach rückwärts, was das Verbindungselement 224 nach rückwärts schiebt, wodurch wiederum der geschlitzte vordere Bereich des Schaltelements 226 nach oben um seine schwenkbare Verbindung mit dem Nockenelement 198 nach oben schwenkt. Wenn der vordere Bereich des Schaltelements 226 nach oben schwenkt, schwenkt der vordere Bereich 204 des länglichen Elements 206, der in dem Schlitz 228 des Schaltelements 226 angeordnet ist, in dem Schlitz 202 in dem Nockenelement 198 nach oben bis der obere Endbereich 210 des Schlitzes 202 erreicht ist, wie es in Figur 11 dargestellt ist. Dies richtet das längliche Element 206 für ein Verschieben in die passende Richtung, wenn das Lenkrad 28 durch die Bedienungsperson gedreht wird, aus. Wenn die Bedienungsperson das Lenkrad 28 in diesem Modus dreht, schwenken der Lenkhebel 194, das Stangenelement 196 und das Nockenelement 198 um die Schwenkachse 200 des Nockenelements 198. Dies bewirkt, daß das obere Ende des Nockenelements 198 sich in Längsrichtung korrespondierend zu der Richtung in der das Lenkrad 28 gedreht wurde, verschieben wird, wodurch wiederum das längliche Element 206 in Längsrichtung mit dem oberen Ende des Nockenelements 198 verschiebt. Ein Verschieben des länglichen Elements 206 in Längsrichtung schwenkt den Arm 208 und die Lenksteuereingangswelle 104, wodurch bewirkt wird, daß das Fahrzeug 10 eine Wendung ausführt.

Wenn die Bedienungsperson es wünscht, in Rückwärtsrichtung zu fahren, wird sie das Umkehr-Pedal 42 herunterdrücken. Dies bewirkt, daß das Betätigungsmittel 216 nach vorne schenkt. Der Kurvenfolger 220 wird an der Kurvenoberfläche des Schlitzes 218 des mittleren Bereichs 246 des Schlitzes 218 angreifen, was den Kurvenfolger 220 nach vorne und oben verschieben wird. Das Hebelelement 222 wird sich mit dem Kurvenfolger 220 nach vorne verschieben, wodurch wiederum das Verbindungselement 224 nach vorne gezogen wird. Dies bewirkt, daß der geschlitzte vordere Bereich des Schaltelements nach unten schwenkt, wodurch der vordere Bereich 204 des länglichen Elements 206 nach unten in den untersten Endbereich 212 des Schlitzes 202 gedrückt wird, der in das Nockenelement 198 eingeformt ist. Wenn das Lenkrad 28 in dem Rückwärtsmodus gedreht wird, werden der Lenkhebel 194, das Stangenelement 196 und das Nockenelement 198 um die Schwenkachse 200 des Nockenelements 198 schwenken, wodurch der untere Bereich des Nockenelements 198 sich in Längsrichtung verschieben wird. Dies bewirkt, daß das längliche Element 206 sich in Längsrichtung verschiebt und dabei den Arm 208 und die Lenksteuereingangswelle 104 der Lenkeinheit 50 des Getriebes 46 betätigt, um eine Fahrzeugwendung auszuführen. In diesem Rückwärtsfahrtmodus befindet sich das längliche Element 206 aber auf der der Seite entgegengesetzten Seite der Schwenkachse 200, in der es sich im Vorwärtsmodus befand. In dem Rückwärtsmodus ist das längliche Element 206 in dem unteren Bereich 212 des Schlitzes 202 angeordnet und das längliche Element 206 wird sich in die entgegengesetzte Richtung, zu der Richtung verschieben, in die es sich verschieben würde, wenn das längliche Element 206 in dem oberen Bereich 210 des Schlitzes 202 angeordnet wäre, wenn ein Betrieb in Vorwärtsrichtung erfolgte.

Mit anderen Worten, wenn das Lenkrad 28 während einer Vorwärtsfahrt nach rechts gedreht wird, wird das Lenkgestänge 192 bewirken, daß das Nockenelement 198 entgegen dem Uhrzeigersinn schwenkt, wie es aus Figur 9 ersehen werden kann, wodurch sich das längliche Element 206 in dem oberen Bereich 210 des Schlitzes 202 nach rückwärts schiebt und der Arm 208 und die Lenksteuereingangswelle 104 entgegen dem Uhrzeigersinn schwenken. Wenn das Lenkrad 28 während einer Rückwärtsfahrt nach rechts gedreht wird, wird das Lenkgestänge 192 bewirken, daß das Nockenelement 198 entgegen dem Uhrzeigersinn schwenkt, wodurch sich das längliche Element 206 in dem unteren Bereich 212 des Schlitzes 202 nach vorne schiebt und der Arm 208 und die Lenksteuereingangswelle 104 im Uhrzeigersinn schwenken. Ähnlich wird, wenn das Lenkrad während einer Vorwärtsfahrt nach links gedreht wird, das Lenkgestänge bewirken, daß das Nockenelement 198 im Uhrzeigersinn schwenkt, wodurch sich das längliche Element 206 in dem oberen Bereich 210 des Schlitzes 202 nach vorne verschiebt und der Arm 208 und die Lenksteuereingangswelle 104 im Uhrzeigersinn verschwenken. Wenn das Lenkrad 28 während einer Rückwärtsfahrt nach links gedreht wird, wird das Lenkgestänge 192 bewirken, daß das Nockenelement 198 im Uhrzeigersinn verschwenkt, wodurch sich das längliche Element 206 in dem unteren Bereich 212 des Schlitzes nach rückwärts verschiebt und der Arm 208 und die Lenksteuereingangswelle 204 gegen den Uhrzeigersinn verschwenken.

Das Lenkgestänge 192, das in den Figuren 7 - 11 gezeigt wird, erlaubt es dem Fahrzeug 10 daher, während einer Rückwärtsfahrt in einer Art und Weise gelenkt zu werden, die der ähnlich ist, in der ein Kraftwagen oder ein in üblicher Weise gelenkter Rasentraktor rückwärts lenkt. Wenn die Bedienungsperson das Lenkrad 28 nach rechts entweder während einer Vorwärts- oder einer Rückwärtsfahrt dreht, wird sich das Fahrzeug 10 zur rechten Seite der Bedienungsperson hin drehen. Wenn die Bedienungsperson das Lenkrad 28 nach links entweder während einer Vorwärts- oder Rückwärtsfahrt dreht, wird sich das Fahrzeug 10 zur linken Seite der Bedienungsperson hin wenden.

In den ersten Hebel 132 des Pedalgestänges ist ein Schlitz 240 eingeformt. Dieser Schlitz 240 begründet ein Spiel in dem Antriebsgestänge 234, das es notwendig macht, daß das Vorwärts-Pedal 40 leicht gedrückt werden muß, bevor die Antriebseinheit 48 des Getriebes 46 eingerückt wird. Wenn das Umkehr-Pedal 42 über durch diesen Anfangsbewegungsbereich hindurchgedrückt ist, wird die Betätigungseinrichtung angreifen und bewirken, daß das längliche Element 206 nach oben in den oberen Endbereich 210 des Schlitzes 202 verschoben wird, bevor der Antriebshebel 238 das Ende des Schlitzes 204 in dem ersten Hebel 142 erreicht. Das heißt, daß, um eine Wendung auf der Stelle auszuführen, wenn das Fahrzeug 10 sich nicht bewegt, die Bedienungsperson das Lenkrad 28 in die gewünschte Richtung der Drehung auf der Stelle drehen wird, da aber das Vorwärts-Pedal 40 noch nicht gedrückt ist, ist das längliche Element 206 in dem mittleren Bereich 244 des Schlitzes 202 in dem Nockenelement 198 angeordnet und daher wird ein Schwenken des Nockenelements 198 das längliche Element 206 nicht verschieben. Das Fahrzeug 10 wird daher nicht beginnen sich zu drehen. Die Bedienungsperson muß auch das Vorwärts-Pedal 40 drücken, um eine Drehung auszuführen. Wenn sie beginnt das Vorwärts-Pedal 40 zu drücken, beginnt die Betätigungseinrichtung 214, das längliche Element 206 in Richtung des oberen Endbereichs 210 des Schlitzes 202 zu verschieben. Da sich das längliche Element 206 nach oben von der Schwenkachse 200 des Nockenelements 198 weg verschiebt, wird sich das längliche Element 206 auch nach rückwärts verschieben, wodurch der Arm 208 und die Lenksteuereingangswelle 104 schwenken und das Fahrzeug 10 beginnen wird, eine Drehung auf der Stelle auszuführen. Der Schlitz 240 in dem ersten Hebel 142 erlaubt es dem Fahrzeug eine Drehung auf der Stelle auszuführen, wenn die Bedienungsperson das Vorwärts-Pedal 40 drückt, ohne daß das Fahrzeug 10 nach vorne angetrieben wird. Wenn die Bedienungsperson fortfährt, das Vorwärts-Pedal 40 weiter zu drücken, dann wird der Antriebshebel 238 schließlich an dem vorderen Ende des Schlitzes 240 in dem ersten Hebel 142 anliegen, und das Stangenelement 236 wird beginnen sich nach rückwärts zu verschieben, zu welcher Zeit die Antriebseinheit 48 des Getriebes 46 beginnen wird, das Fahrzeug 10 nach vorwärts anzutreiben.

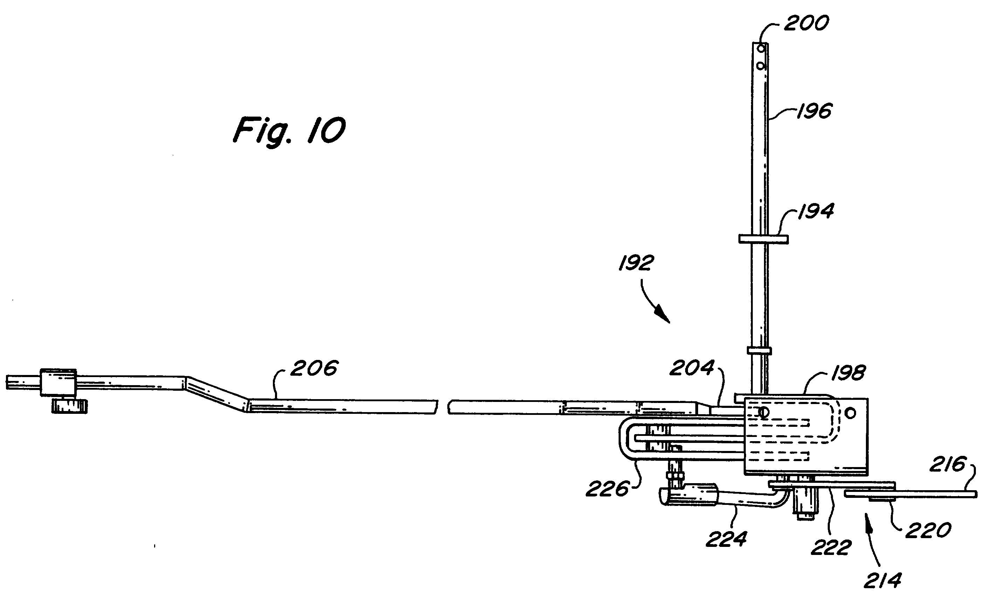

Wie es am besten aus Figur 9 ersehen werden kann, ist die Schwenkachse 200 des Nockenelements 198 allgemein direkt in dem Zentrum des Schlitzes 202 des Nockenelements 198 ausgerichtet. Wenn die Schwenkachse 200 von dieser in Figur 9 gezeigten Stellung nach vorne oder rückwärts versetzt angeordnet wäre, würde der Bewegungsbereich des Lenkrades 28 in einer Richtung kleiner sein, als der Bewegungsbereich in die andere Richtung aus der Geradeausfahrtposition. Durch ein Positionieren der Welle im allgemeinen direkt zwischen den oberen und unteren Endbereichen des Schlitzes 202 und im allgemeinen mit einem zentralen Bereich 244 des Schlitzes ausgerichtet ist das Lenkrad 28 in der Lage, durch einen gleichen Bewegungsbereich in jede Richtung bezogen auf eine Geradeausstellung verstellt zu werden. Das Nockenelement 198 ist im allgemeinen von oben betrachtet C-förmig ausgebildet, wie es am besten aus Figur 10 ersehen werden kann, wodurch es der Schwenkachse 200 erlaubt wird, wirksam ausgerichtet zu sein, das heißt fluchtend mit oder allgemein sich mit einem Bereich des Schlitzes 202 schneidend.

## Patentansprüche

1. Getriebe (38) zum Antrieb und zur Lenkung eines Fahrzeugs (10) mit zumindest einer Antriebseinheit (48) und einer Lenkeinheit (50), die mit einer linken und einer rechten Antriebsachse (84, 86) derart wirksam verbindbar sind, daß die Antriebsachsen (84, 86) zur Lenkung des Fahrzeugs (10) mit unterschiedlichen Geschwindigkeiten rotieren, dadurch gekennzeichnet, daß die maximale Antriebsgeschwindigkeit zumindest etwa dreimal größer ist als die maximale Lenkgeschwindigkeit.

2. Getriebe nach Anspruch 1, dadurch gekennzeichnet, daß die maximale Antriebsgeschwindigkeit höchstens etwa fünfmal größer ist als die maximale Lenkgeschwindigkeit.

3. Getriebe nach einem oder mehreren der vorherigen Ansprüche, dadurch gekennzeichnet, daß die Antriebseinheit (48) und/oder die Lenkeinheit (50) einen hydrostatischen Antrieb aufweist.

4. Getriebe nach einem oder mehreren der vorherigen Ansprüche, dadurch gekennzeichnet, daß die Lenkeinheit (50) und die Antriebseinheit (48) Ausgangswellen (70, 108) aufweisen, die über wenigstens ein Übersetzungsgetriebe wirksam miteinander verbindbar sind.

5. Getriebe nach einem oder mehreren der vorherigen Ansprüche, dadurch gekennzeichnet, die Lenkeinheit (50) und/oder die Antriebseinheit (48) zumindest ein Differential (52, 54) aufweisen.

6. Fahrzeug (10), vorzugsweise ein Fahrzeug zur Rasen-, Garten- bzw. Grundstückspflege, mit einem Getriebe (38) nach einem oder mehreren der vorherigen Ansprüche.

7. Fahrzeug nach Anspruch 6, gekennzeichnet durch ein Lenkmittel, vorzugsweise in der Art eines Lenkrads (30), wobei das Lenkmittel bezogen auf eine neutrale Stellung vorzugsweise um maximal 90 Grad, 135 Grad, 180 Grad bzw. 270 Grad nach rechts bzw. links verstellbar ist.
